# EUROPEAN PATENT APPLICATION

(11) **EP 4 006 064 A1**
(43) Date of publication of application: **01.06.2022**
(21) Application number: 20847939.4
(22) Date of filing: 08.07.2020
(51) Int. Cl.: C08F 20/04, C08F 20/54, C08L 33/26, C08L 101/00, H01M 4/13, C08K 3/013

(54) **BINDER COMPOSITION FOR HEAT-RESISTANT LAYER OF NON-AQUEOUS SECONDARY BATTERY, SLURRY COMPOSITION FOR HEAT-RESISTANT LAYER OF NON-AQUEOUS SECONDARY BATTERY, HEAT-RESISTANT LAYER FOR NON-AQUEOUS SECONDARY BATTERY, AND NON-AQUEOUS SECONDARY BATTERY**

(30) Priority: 31.07.2019 JP 2019141168
(71) Applicant: Zeon Corporation, Tokyo 100-8246 (JP)
(72) Inventor: ASAI Kazuki, Tokyo 100-8246 (JP)
(74) Representative: Parchmann, Stefanie
(86) International application number: PCT/JP2020/026762
(87) International publication number: WO 2021/020061

(57) **Abstract**

Provided is a binder composition for a non-aqueous secondary battery heat-resistant layer with which it is possible to produce a slurry composition for a non-aqueous secondary battery heat-resistant layer that has excellent dispersion stability and coatability and that can form a heat-resistant layer for a non-aqueous secondary battery having excellent heat shrinkage resistance. The binder composition for a non-aqueous secondary battery heat-resistant layer contains a water-soluble polymer and water. The water-soluble polymer includes an amide group-containing monomer unit, an acid group-containing monomer unit, and a hydroxyl group-containing monomer unit. The proportional content of the amide group-containing monomer unit in the water-soluble polymer is not less than 63 mass% and not more than 98 mass% and the proportional content of the acid group-containing monomer unit in the water-soluble polymer is not less than 1 mass% and not more than 20 mass%.

## Description

### TECHNICAL FIELD

The present disclosure relates to a binder composition for a non-aqueous secondary battery heat-resistant layer, a slurry composition for a non-aqueous secondary battery heat-resistant layer, a heat-resistant layer for a non-aqueous secondary battery, and a non-aqueous secondary battery.

### BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. A secondary battery typically includes battery members such as electrodes (positive electrode and negative electrode) and a separator that isolates the positive electrode and the negative electrode from each other. Battery members that include a protective layer for improving heat resistance (i.e., a heat-resistant layer) are conventionally used as such battery members.

A heat-resistant layer of a secondary battery may be a layer that is formed by binding non-conductive inorganic particles such as alumina through a binder. Such a heat-resistant layer is normally formed by preparing a slurry composition (hereinafter, also referred to as a "slurry composition for a non-aqueous secondary battery heat-resistant layer" or simply as a "slurry composition for a heat-resistant layer") having non-conductive inorganic particles and a binder dissolved or dispersed in a dispersion medium such as water, and then applying the slurry composition for a heat-resistant layer onto a substrate such as a separator substrate or electrode substrate and drying the slurry composition for a heat-resistant layer.

In recent years, attempts have been made to improve binder compositions used in heat-resistant layer formation in order to achieve further improvement of secondary battery performance (for example, refer to Patent Literature (PTL) 1).

As one specific example, PTL 1 discloses a binder composition for a secondary battery porous membrane that contains a polycarboxylic acid having specific properties and water, and reports that this binder composition for a secondary battery porous membrane has high preservation stability and that a porous membrane for a secondary battery produced using the binder composition is easy to coat and enables production of a secondary battery having improved performance in terms of high-temperature cycle characteristics and the like.

### CITATION LIST

### Patent Literature

PTL 1: WO2015/129408A1

### SUMMARY

### (Technical Problem)

However, there has been demand for further improvement of secondary battery performance in recent years, and the conventional binder composition described above leaves room for improvement in terms of improving dispersion stability of a slurry composition produced using the binder composition while also further increasing coatability of the slurry composition. Moreover, it would be desirable to further improve the heat shrinkage resistance of a heat-resistant layer obtained using the conventional binder composition described above.

Accordingly, one object of the present disclosure is to provide a binder composition for a non-aqueous secondary battery heat-resistant layer with which it is possible to produce a slurry composition for a non-aqueous secondary battery heat-resistant layer that has excellent dispersion stability and coatability and that can form a heat-resistant layer for a non-aqueous secondary battery having excellent heat shrinkage resistance.

Another object of the present disclosure is to provide a slurry composition for a non-aqueous secondary battery heat-resistant layer that has excellent dispersion stability and coatability and that can form a heat-resistant layer for a non-aqueous secondary battery having excellent heat shrinkage resistance.

Yet another object of the present disclosure is to provide a heat-resistant layer for a non-aqueous secondary battery that has excellent heat shrinkage resistance and a non-aqueous secondary battery that includes this heat-resistant layer.

### (Solution to Problem)

The inventor conducted diligent investigation with the aim of solving the problem set forth above. The inventor discovered that it is possible to form a slurry composition having excellent dispersion stability and coatability and a heat-resistant layer having excellent heat shrinkage resistance by using a binder composition containing water and a water-soluble polymer that includes an amide group-containing monomer unit, an acid group-containing monomer unit, and a hydroxyl group-containing monomer unit and in which the proportional contents of the amide group-containing monomer unit and the acid group-containing monomer unit are within specific ranges. In this manner, the inventor completed the present disclosure.

Specifically, the present disclosure aims to advantageously solve the problem set forth above, and a presently disclosed binder composition for a non-aqueous secondary battery heat-resistant layer comprises a water-soluble polymer and water, wherein the water-soluble polymer includes an amide group-containing monomer unit, an acid group-containing monomer unit, and a hydroxyl group-containing monomer unit, and proportional content of the amide group-containing monomer unit in the water-soluble polymer is not less than 63 mass% and not more than 98 mass% and proportional content of the acid group-containing monomer unit in the water-soluble polymer is not less than 1 mass% and not more than 20 mass%. Through a binder composition containing water and a water-soluble polymer that includes an amide group-containing monomer unit, an acid group-containing monomer unit, and a hydroxyl group-containing monomer unit and in which the proportional contents of the amide group-containing monomer unit and the acid group-containing monomer unit are within the ranges set forth above in this manner, it is possible to produce a slurry composition that has excellent dispersion stability and coatability. Moreover, a slurry composition that is produced in this manner enables good formation of a heat-resistant layer having excellent heat shrinkage resistance.

The phrase "includes a monomer unit" as used in relation to a polymer in the present disclosure means that "a polymer obtained with the monomer includes a repeating unit derived from the monomer".

Moreover, the "proportional content (mass%)" of each monomer unit (each repeating unit) included in a polymer that is referred to in the present disclosure can be measured using a nuclear magnetic resonance (NMR) method such as ¹H-NMR or ¹³C-NMR.

In the presently disclosed binder composition for a non-aqueous secondary battery heat-resistant layer, proportional content of the hydroxyl group-containing monomer unit in the water-soluble polymer is preferably not less than 1 mass% and not more than 25 mass%. When the proportional content of the hydroxyl group-containing monomer unit in the water-soluble polymer is within the range set forth above, dispersion stability and coatability of a slurry composition can be further improved, and heat shrinkage resistance of a heat-resistant layer can be even further increased.

In the presently disclosed binder composition for a non-aqueous secondary battery heat-resistant layer, the hydroxyl group-containing monomer unit is preferably a hydroxyl group-containing (meth)acrylamide monomer unit. When the hydroxyl group-containing monomer unit included in the water-soluble polymer of the binder composition is a hydroxyl group-containing (meth)acrylamide monomer unit, the amount of water imported into a secondary battery due to a heat-resistant layer can be reduced while also even further increasing heat shrinkage resistance of the heat-resistant layer. In addition, cycle characteristics of the secondary battery can be improved.

Note that in the present disclosure, "(meth)acryl" is used to indicate "acryl" and/or "methacryl".

In the presently disclosed binder composition for a non-aqueous secondary battery heat-resistant layer, a molar ratio of proportional content of the hydroxyl group-containing monomer unit relative to proportional content of the acid group-containing monomer unit in the water-soluble polymer is preferably 0.70 or more. When the molar ratio of the proportional content of the hydroxyl group-containing monomer unit relative to the proportional content of the acid group-containing monomer unit in the water-soluble polymer (hereinafter, also referred to simply as the "hydroxyl group/acid group molar ratio") is not less than the value set forth above, dispersion stability and coatability of a slurry composition can be further improved.

Note that the "hydroxyl group/acid group molar ratio" referred to in the present disclosure can be calculated from measurement values that are obtained through measurement of the proportional content (mol%) of the acid group-containing monomer unit and the proportional content (mol%) of the hydroxyl group-containing monomer unit by a nuclear magnetic resonance (NMR) method such as ¹H-NMR or ¹³C-NMR.

In the presently disclosed binder composition for a non-aqueous secondary battery heat-resistant layer, the water-soluble polymer preferably has a weight-average molecular weight of not less than 200,000 and not more than 2,000,000. When the weight-average molecular weight of the water-soluble polymer contained in the binder composition is within the range set forth above, coatability of a slurry composition can be further improved, and heat shrinkage resistance of a heat-resistant layer can be even further increased.

Note that the weight-average molecular weight of a water-soluble polymer referred to in the present disclosure can be measured by gel permeation chromatography (GPC).

The presently disclosed binder composition for a non-aqueous secondary battery heat-resistant layer preferably further comprises a particulate polymer. When the binder composition further contains a particulate polymer, good close adherence can be achieved between a substrate and a heat-resistant layer that is obtained using the binder composition. In addition, a secondary battery can be provided with excellent cycle characteristics.

Moreover, the present disclosure aims to advantageously solve the problem set forth above, and a presently disclosed slurry composition for a non-aqueous secondary battery heat-resistant layer comprises: non-conductive inorganic particles; and any one of the binder compositions for a non-aqueous secondary battery heat-resistant layer set forth above. A slurry composition that contains non-conductive inorganic particles and any one of the binder compositions set forth above in this manner has excellent dispersion stability and coatability. Moreover, this slurry composition enables formation of a heat-resistant layer having excellent heat shrinkage resistance.

Furthermore, the present disclosure aims to advantageously solve the problem set forth above, and a presently disclosed heat-resistant layer for a non-aqueous secondary battery is formed using the slurry composition for a non-aqueous secondary battery heat-resistant layer set forth above. A heat-resistant layer that is formed from the slurry composition set forth above in this manner has excellent heat shrinkage resistance.

Also, the present disclosure aims to advantageously solve the problem set forth above, and a presently disclosed non-aqueous secondary battery comprises the heat-resistant layer for a non-aqueous secondary battery set forth above. A secondary battery that includes a battery member including the heat-resistant layer set forth above in this manner has sufficiently ensured safety.

### (Advantageous Effect)

According to the present disclosure, it is possible to provide a binder composition for a non-aqueous secondary battery heat-resistant layer with which it is possible to produce a slurry composition for a non-aqueous secondary battery heat-resistant layer that has excellent dispersion stability and coatability and that can form a heat-resistant layer for a non-aqueous secondary battery having excellent heat shrinkage resistance.

Moreover, according to the present disclosure, it is possible to provide a slurry composition for a non-aqueous secondary battery heat-resistant layer that has excellent dispersion stability and coatability and that can form a heat-resistant layer for a non-aqueous secondary battery having excellent heat shrinkage resistance.

Furthermore, according to the present disclosure, it is possible to provide a heat-resistant layer for a non-aqueous secondary battery that has excellent heat shrinkage resistance and a non-aqueous secondary battery that includes this heat-resistant layer.

### DETAILED DESCRIPTION

The following provides a detailed description of embodiments of the present disclosure.

The presently disclosed binder composition for a non-aqueous secondary battery heat-resistant layer can be used in production of the presently disclosed slurry composition for a non-aqueous secondary battery heat-resistant layer. Moreover, the presently disclosed slurry composition for a non-aqueous secondary battery heat-resistant layer can be used in formation of a heat-resistant layer of a non-aqueous secondary battery such as a lithium ion secondary battery. A feature of the presently disclosed heat-resistant layer for a non-aqueous secondary battery is that it is formed from the presently disclosed slurry composition for a non-aqueous secondary battery heat-resistant layer. Moreover, a feature of the presently disclosed non-aqueous secondary battery is that it includes a heat-resistant layer for a non-aqueous secondary battery that has been produced using the presently disclosed slurry composition for a non-aqueous secondary battery heat-resistant layer.

(Binder composition for non-aqueous secondary battery heat-resistant layer)

The presently disclosed binder composition contains a water-soluble polymer and water serving as a dispersion medium, and optionally further contains a particulate polymer and other components.

Features of the presently disclosed binder composition are that the aforementioned water-soluble polymer includes an amide group-containing monomer unit, an acid group-containing monomer unit, and a hydroxyl group-containing monomer unit, that the proportional content of the amide group-containing monomer unit is not less than 63 mass% and not more than 98 mass%, and that the proportional content of the acid group-containing monomer unit is not less than 1 mass% and not more than 20 mass%.

As a result of the presently disclosed binder composition containing, in water, a water-soluble polymer that includes an amide group-containing monomer unit, an acid group-containing monomer unit, and a hydroxyl group-containing monomer unit and in which the proportional contents of the amide group-containing monomer unit and the acid group-containing monomer unit are within the ranges set forth above, the binder composition can be used to produce a slurry composition having excellent dispersion stability and coatability and also to form a heat-resistant layer having excellent heat shrinkage resistance. Although it is not clear why the effects described above are obtained by using a binder composition that has the water-soluble polymer described above dissolved in water in this manner, the reason for this is presumed to be as follows.

Firstly, the amide group-containing monomer unit included in the water-soluble polymer of the binder composition is thought to function as a main framework for imparting high rigidity to the water-soluble polymer and thereby improving heat shrinkage resistance of an obtained heat-resistant layer.

Moreover, the acid group-containing monomer unit included in the water-soluble polymer of the binder composition binds to non-conductive inorganic particles through electrostatic interactions in a slurry and thereby functions as a site of adsorption to the non-conductive inorganic particles. However, excessively strong adsorption of an acid group-containing monomer unit to non-conductive inorganic particles may cause aggregation of the non-conductive inorganic particles and reduce dispersion stability of the non-conductive inorganic particles in the slurry. Such excessive adsorption of an acid group-containing monomer unit to non-conductive inorganic particles can be inhibited herein through a hydration effect of a hydroxyl group because the water-soluble polymer further includes a hydroxyl group-containing monomer unit. It is thought that for this reason, the dispersion stability of non-conductive inorganic particles in a slurry can be improved.

Moreover, a slurry composition having excellent dispersion stability as described above is thought to have excellent coatability because the slurry composition can be uniformly applied onto a substrate without variation of coating weight and without the formation of defects (streaks, uneven coating, cissing, etc.) in the resultant heat-resistant layer.

Consequently, the presently disclosed binder composition can be used to obtain a slurry composition having excellent dispersion stability and coatability. Moreover, a slurry composition that has been produced using the presently disclosed binder composition makes it possible to obtain a heat-resistant layer having excellent heat shrinkage resistance.

### <Water-soluble polymer>

The water-soluble polymer contained in the binder composition for a non-aqueous secondary battery heat-resistant layer is a component that, in a slurry composition, can contribute to improving dispersion stability and coatability of the slurry composition. Moreover, the water-soluble polymer is a component that can function as a binder in a heat-resistant layer formed using the slurry composition, and can impart adhesiveness to a heat-resistant layer formed using a slurry composition that contains the binder composition while also holding non-conductive inorganic particles contained in the heat-resistant layer so that the non-conductive inorganic particles do not detach from the heat-resistant layer.

Note that when a polymer is referred to as "water-soluble" in the present disclosure, this means that when 0.5 g of the polymer is dissolved in 100 g of water at a temperature of 25°C, insoluble content is less than 1.0 mass%.

The water-soluble polymer includes an amide group-containing monomer unit and an acid group-containing monomer unit in proportions that are within specific ranges and also includes a hydroxyl group-containing monomer unit. Note that the water-soluble polymer may include repeating units other than the amide group-containing monomer unit, the acid group-containing monomer unit, and the hydroxyl group-containing monomer unit (hereinafter, referred to as "other repeating units").

### «Amide group-containing monomer unit»

Examples of amide group-containing monomers that can form the amide group-containing monomer unit include N-vinylacetamide, (meth)acrylamide, dimethyl(meth)acrylamide, diethyl(meth)acrylamide, N-methoxymethyl(meth)acrylamide, and dimethylaminopropyl(meth)acrylamide. Of these amide group-containing monomers, acrylamide and methacrylamide are preferable from a viewpoint of even further increasing heat shrinkage resistance of a heat-resistant layer, and acrylamide is more preferable. One amide group-containing monomer may be used individually, or two or more amide group-containing monomers may be used in combination.

Note that a monomer unit including both an amide group and a hydroxyl group is considered to be included among the "hydroxyl group-containing monomer unit" and not be included among the "amide group-containing monomer unit" in the present disclosure. Moreover, a monomer unit including both an amide group and an acid group (carboxy group, sulfo group, phosphate group, etc.) is considered to be included among the "acid group-containing monomer unit" and not be included among the "amide group-containing monomer unit" in the present disclosure.

When the amount of all repeating units (all monomer units) in the water-soluble polymer used herein is taken to be 100 mass%, the proportional content of the amide group-containing monomer unit in the water-soluble polymer is required to be not less than 63 mass% and not more than 98 mass%, is preferably 67 mass% or more, more preferably 71 mass% or more, and even more preferably 74 mass% or more, and is preferably 95 mass% or less, and more preferably 90 mass% or less. When the proportional content of the amide group-containing monomer unit in the water-soluble polymer is less than 63 mass%, heat shrinkage resistance of a heat-resistant layer cannot be sufficiently ensured because rigidity of the water-soluble polymer decreases. On the other hand, when the proportional content of the amide group-containing monomer unit in the water-soluble polymer is more than 98 mass%, dispersion stability of a slurry composition decreases.

### «Acid group-containing monomer unit»

Examples of acid group-containing monomers that can form the acid group-containing monomer unit include carboxy group-containing monomers, sulfo group-containing monomers, and phosphate group-containing monomers. Note that an acid group of the acid group-containing monomer unit may form a salt with an alkali metal, ammonia, or the like.

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

An acid anhydride that produces a carboxy group through hydrolysis can also be used as a carboxy group-containing monomer.

Examples of sulfo group-containing monomers that can form a sulfo group-containing monomer unit include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers that can form a phosphate group-containing monomer unit include 2-(meth)acryloyloxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One of the acid group-containing monomers described above may be used individually, or two or more of the acid group-containing monomers described above may be used in combination. From a viewpoint of improving close adherence of a heat-resistant layer and a substrate and also even further improving coatability of a slurry composition, carboxy group-containing monomers are preferable, monocarboxylic acids are more preferable, and acrylic acid is even more preferable as an acid group-containing monomer that can form the acid group-containing monomer unit.

When the amount of all repeating units (all monomer units) in the water-soluble polymer used herein is taken to be 100 mass%, the proportional content of the acid group-containing monomer unit in the water-soluble polymer is required to be not less than 1 mass% and not more than 20 mass%, is preferably 2 mass% or more, more preferably 3 mass% or more, even more preferably 5 mass% or more, and particularly preferably 7 mass% or more, and is preferably 16 mass% or less, more preferably 12 mass% or less, and even more preferably 10 mass% or less. When the proportional content of the acid group-containing monomer unit in the water-soluble polymer is less than 1 mass%, coatability of a slurry composition decreases. Moreover, close adherence of a heat-resistant layer and a substrate cannot be sufficiently ensured because adsorption strength of the water-soluble polymer to non-conductive inorganic particles decreases. On the other hand, when the proportional content of the acid group-containing monomer unit in the water-soluble polymer is more than 20 mass%, dispersion stability of a slurry composition decreases.

### «Hydroxyl group-containing monomer unit»

Examples of hydroxyl group-containing monomers that can form the hydroxyl group-containing monomer unit include hydroxyl group-containing (meth)acrylamide monomers such as N-hydroxymethylacrylamide, N-hydroxyethylacrylamide, N-hydroxypropylacrylamide, N-hydroxymethylmethacrylamide, N-hydroxyethylmethacrylamide, and N-hydroxypropylmethacrylamide; and hydroxyl group-containing (meth)acrylate monomers such as 2-hydroxymethyl acrylate, 2-hydroxyethyl acrylate, 2-hydroxypropyl acrylate, 2-hydroxybutyl acrylate, 2-hydroxymethyl methacrylate, 2-hydroxyethyl methacrylate, 2-hydroxypropyl methacrylate, and 2-hydroxybutyl methacrylate.

Of these hydroxyl group-containing monomers, hydroxyl group-containing (meth)acrylamide monomers are preferable from a viewpoint of reducing the amount of water that is imported into a secondary battery due to a heat-resistant layer and even further increasing heat shrinkage resistance of the heat-resistant layer while also improving cycle characteristics of the secondary battery, and N-hydroxyethylacrylamide and N-hydroxymethylacrylamide are more preferable. One hydroxyl group-containing monomer may be used individually, or two or more hydroxyl group-containing monomers may be used in combination.

Note that in the present disclosure, "(meth)acrylate" is used to indicate "acrylate" and/or "methacrylate".

The water-soluble polymer contained in the presently disclosed binder composition is required to include a hydroxyl group-containing monomer unit. When the water-soluble polymer does not include a hydroxyl group-containing monomer unit, dispersion stability and coatability of a slurry composition decrease.

When the amount of all repeating units (all monomer units) in the water-soluble polymer is taken to be 100 mass%, the proportional content of the hydroxyl group-containing monomer unit in the water-soluble polymer is preferably 1 mass% or more, more preferably 3 mass% or more, even more preferably 4 mass% or more, and particularly preferably 10 mass% or more, and is preferably 25 mass% or less, more preferably 21 mass% or less, even more preferably 18 mass% or less, and particularly preferably 17 mass% or less. When the proportional content of the hydroxyl group-containing monomer unit in the water-soluble polymer is 1 mass% or more, dispersion stability and coatability of a slurry composition can be further improved. On the other hand, when the proportional content of the hydroxyl group-containing monomer unit in the water-soluble polymer is 25 mass% or less, heat shrinkage resistance of a heat-resistant layer can be even further increased.

### «Other repeating units»

No specific limitations are placed on other repeating units included in the water-soluble polymer. For example, the water-soluble polymer may include a monomer unit derived from a known monomer, such as a (meth)acrylic acid ester monomer unit or cross-linkable monomer unit described further below in the "Particulate polymer" section, as another repeating unit. Note that the water-soluble polymer may include one type of other repeating unit or may include two or more types of other repeating units.

When all repeating units (all monomer units) included in the water-soluble polymer are taken to be 100 mass%, the proportional content of other repeating units is preferably 10 mass% or less, more preferably 5 mass% or less, even more preferably 1 mass% or less, and particularly preferably 0 mass%.

### «Properties»

### [Hydroxyl group/acid group molar ratio]

A molar ratio of the proportional content of the hydroxyl group-containing monomer unit relative to the proportional content of the acid group-containing monomer unit in the water-soluble polymer (i.e., the hydroxyl group/acid group molar ratio) is preferably 0.70 or more, more preferably 0.80 or more, even more preferably 0.90 or more, and particularly preferably 1.00 or more. When the hydroxyl group/acid group molar ratio is 0.70 or more, dispersion stability and coatability of a slurry composition can be further improved. The upper limit for the hydroxyl group/acid group molar ratio is not specifically limited and can, for example, be set as 5.00 or less, as 3.00 or less, or as 2.63 or less.

### [Weight-average molecular weight]

The weight-average molecular weight of the water-soluble polymer used herein is preferably 200,000 or more, more preferably 300,000 or more, even more preferably 400,000 or more, and particularly preferably 500,000 or more, and is preferably 2,000,000 or less, more preferably 1,500,000 or less, and even more preferably 1,000,000 or less. When the weight-average molecular weight of the water-soluble polymer is 200,000 or more, heat shrinkage resistance of a heat-resistant layer can be even further increased because rigidity of the water-soluble polymer improves. On the other hand, when the weight-average molecular weight of the water-soluble polymer is 2,000,000 or less, coatability of a slurry composition can be further improved because viscosity of the slurry composition decreases.

The weight-average molecular weight of the water-soluble polymer can be adjusted by altering the type and amount of a polymerization initiator and/or polymerization accelerator used in production of the water-soluble polymer, for example.

The water-soluble polymer contained in the presently disclosed binder composition can interact with non-conductive inorganic particles to a suitable degree, which enables good control of the proportion of the water-soluble polymer that is adsorbed to non-conductive inorganic particles in a slurry composition produced using the binder composition. Moreover, through good control of the proportion of the water-soluble polymer that is adsorbed to non-conductive inorganic particles, improvement of dispersion stability and coatability of a slurry composition and improvement of close adherence of a heat-resistant layer and a substrate are sufficiently achieved. From a viewpoint of further improving dispersion stability and coatability of a slurry composition while also increasing close adherence of a heat-resistant layer and a substrate, the proportion of the water-soluble polymer that is adsorbed to non-conductive inorganic particles is preferably not less than 10 mass% and not more than 60 mass% when all of the water-soluble polymer in a slurry composition is taken to be 100 mass%. The method by which the proportion of the water-soluble polymer that is adsorbed to non-conductive inorganic particles is measured may, for example, be a method in which the slurry composition is subjected to centrifugal separation, non-conductive inorganic particles to which the water-soluble polymer has adsorbed are subsequently caused to sediment, and then the weight loss behavior of the resultant sediment during heating is analyzed by Tg/DTA to thereby calculate the proportion of the water-soluble polymer that is adsorbed to the non-conductive inorganic particles or a method in which the slurry composition is subjected to centrifugal separation and the concentration of the water-soluble polymer in a supernatant is subsequently quantified to thereby calculate the proportion of the water-soluble polymer that is adsorbed to the non-conductive inorganic particles.

### «Production method of water-soluble polymer»

The water-soluble polymer described above can, for example, be produced by any method among solution polymerization, suspension polymerization, bulk polymerization, emulsion polymerization, and the like without any specific limitations. Moreover, the polymerization method may be addition polymerization such as ionic polymerization, radical polymerization, or living radical polymerization. The polymerization may be carried out with a commonly used polymerization initiator, polymerization accelerator, emulsifier, dispersant, chain transfer agent, or the like, and the amount thereof may also be the same as commonly used. In particular, aqueous solution polymerization using water as a polymerization solvent is preferable because a solvent removal operation is not necessary, solvent safety is high, and a problem of mixing in of surfactant does not arise.

Note that in a case in which water is used as the polymerization solvent and the above-described monomer composition is polymerized in water to produce an aqueous solution containing the water-soluble polymer, the pH of the aqueous solution is preferably adjusted to not lower than 7 and not higher than 9 after polymerization. This is because it becomes easier to provide a slurry composition with good viscosity stability when the obtained aqueous solution is neutralized and adjusted to a pH that is within the range set forth above.

Examples of polymerization initiators that can be used in production of the water-soluble polymer include, without any specific limitations, known polymerization initiators such as sodium persulfate, ammonium persulfate, and potassium persulfate. Of these polymerization initiators, ammonium persulfate is preferable. One polymerization initiator may be used individually, or two or more polymerization initiators may be used in combination in a freely selected ratio.

Examples of polymerization accelerators that can be used include, without any specific limitations, known reducing polymerization accelerators such as L-ascorbic acid, sodium bisulfite, and tetramethylethylenediamine. Of these polymerization accelerators, L-ascorbic acid is preferable. One polymerization accelerator may be used individually, or two or more polymerization accelerators may be used in combination in a freely selected ratio.

### <Particulate polymer>

The particulate polymer that can optionally be contained in the presently disclosed binder composition is a component that functions as a binder in the same manner as the water-soluble polymer described above. The inclusion of a particulate polymer in the binder composition can improve close adherence of an obtained heat-resistant layer and a substrate.

The particulate polymer is water-insoluble particles that are formed of a specific polymer. Note that when particles are referred to as "water-insoluble" in the present disclosure, this means that when 0.5 g of the polymer is dissolved in 100 g of water at a temperature of 25°C, insoluble content is 90 mass% or more.

The particulate polymer is not specifically limited so long as it is a particulate polymer that is water-insoluble and can be dispersed in a dispersion medium such as water. For example, a conjugated diene polymer, a fluoropolymer, or an acrylic polymer can be used as the particulate polymer. Of these examples, it is preferable to use an acrylic polymer. By using an acrylic polymer as a particulate polymer contained in the binder composition, it is possible to improve close adherence of a heat-resistant layer and a substrate and also to increase oxidation resistance of a battery member that includes the heat-resistant layer.

Note that one particulate polymer may be used individually, or two or more particulate polymers may be used in combination in a freely selected ratio.

### «Conjugated diene polymer»

A conjugated diene polymer is a polymer that includes a conjugated diene monomer unit. Specific examples of conjugated diene polymers include, but are not specifically limited to, copolymers that include an aromatic vinyl monomer unit and an aliphatic conjugated diene monomer unit (styrene-butadiene copolymer (SBR), etc.), butadiene rubber (BR), isoprene rubber, acrylic rubber (NBR) (copolymer including an acrylonitrile unit and a butadiene unit), and hydrogenated products of any thereof.

### «Fluoropolymer»

Specific examples of fluoropolymers include, but are not specifically limited to, polyvinylidene fluoride (PVdF) and polyvinylidene fluoride-hexafluoropropylene (PVdF-HFP) copolymer.

### «Acrylic polymer»

An acrylic polymer is a polymer that includes a (meth)acrylic acid ester monomer unit. The acrylic polymer may also include repeating units other than the (meth)acrylic acid ester monomer unit. Although a hydrophilic group-containing monomer unit and a cross-linkable monomer unit are preferable as such other repeating units, no specific limitations are made and monomer units other than a (meth)acrylic acid ester monomer unit, a hydrophilic group-containing monomer unit, and a cross-linkable monomer unit (i.e., other monomer units) may be included.

### [(Meth)acrylic acid ester monomer unit]

Examples of (meth)acrylic acid ester monomers that can form the (meth)acrylic acid ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, and 2-ethylhexyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, and 2-ethylhexyl methacrylate. One of these (meth)acrylic acid ester monomers may be used individually, or two or more of these (meth)acrylic acid ester monomers may be used in combination. Of these examples, n-butyl acrylate and 2-ethylhexyl acrylate are preferable as (meth)acrylic acid ester monomers.

The proportional content of the (meth)acrylic acid ester monomer unit in the particulate polymer when the amount of all repeating units (all monomer units) in the particulate polymer is taken to be 100 mass% is preferably more than 50 mass%, and more preferably 60 mass% or more, and is preferably 99 mass% or less, and more preferably 97 mass% or less.

### [Hydrophilic group-containing monomer unit]

Examples of hydrophilic group-containing monomers that can form the hydrophilic group-containing monomer unit include the "acid group-containing monomers" and the "hydroxyl group-containing monomers" that were described in the "Water-soluble polymer" section. One of these hydrophilic group-containing monomers may be used individually, or two or more of these hydrophilic group-containing monomers may be used in combination. Of these examples, methacrylic acid is preferable as a hydrophilic group-containing monomer.

The proportional content of the hydrophilic group-containing monomer unit in the particulate polymer when the amount of all repeating units (all monomer units) in the particulate polymer is taken to be 100 mass% is preferably 1 mass% or more, and is preferably 5 mass% or less.

### [Cross-linkable monomer unit]

Examples of cross-linkable monomers that can form the cross-linkable monomer unit include glycidyl methacrylate, allyl glycidyl ether, ethylene glycol dimethacrylate, allyl (meth)acrylate, and divinylbenzene. One of these cross-linkable monomers may be used individually, or two or more of these cross-linkable monomers may be used in combination. Of these examples, allyl glycidyl ether and allyl methacrylate are preferable as cross-linkable monomers.

The proportional content of the cross-linkable monomer unit in the particulate polymer when the amount of all repeating units (all monomer units) in the particulate polymer is taken to be 100 mass% is preferably 1 mass% or more, and is preferably 5 mass% or less.

### [Other monomer units]

Examples of other monomers that can form other monomer units include monomers other than the (meth)acrylic acid ester monomers, hydrophilic group-containing monomers, and cross-linkable monomers described above without any specific limitations. Specific examples of such other monomers include α,β-unsaturated nitrile monomers such as acrylonitrile and methacrylonitrile; and styrenic monomers such as styrene, chlorostyrene, vinyltoluene, t-butylstyrene, methyl vinylbenzoate, vinylnaphthalene, chloromethylstyrene, and α-methylstyrene. One of these other monomers may be used individually, or two or more of these other monomers may be used in combination. Of these examples, acrylonitrile and styrene are preferable as other monomers.

The proportional content of other monomer units in the particulate polymer when the amount of all repeating units (all monomer units) in the particulate polymer is taken to be 100 mass% is preferably 1 mass% or more, and is preferably 35 mass% or less.

### «Properties»

### [Glass-transition temperature]

The glass-transition temperature of the particulate polymer is preferably lower than 20°C, and more preferably lower than 15°C. When the glass-transition temperature of the particulate polymer is lower than 20°C, close adherence of a heat-resistant layer and a substrate can be improved. Moreover, the lower limit for the glass-transition temperature of the particulate polymer is not specifically limited and can be set as higher than -120°C or as higher than -60°C, for example.

Note that the "glass-transition temperature" of a particulate polymer referred to in the present disclosure can be measured by a method described in the EXAMPLES section of the present specification.

Moreover, the glass-transition temperature of the particulate polymer can be adjusted by altering the type and/or amount of a monomer, polymerization initiator, and/or polymerization accelerator used in production of the particulate polymer, for example.

### [Volume-average particle diameter]

The volume-average particle diameter of the particulate polymer is preferably 0.1 µm or more, more preferably 0.15 µm or more, even more preferably 0.2 µm or more, and particularly preferably 0.31 µm or more, and is preferably 1 µm or less, more preferably 0.8 µm or less, and even more preferably 0.5 µm or less. When the volume-average particle diameter of the particulate polymer is 0.1 µm or more, cycle characteristics of a secondary battery can be improved. On the other hand, when the volume-average particle diameter of the particulate polymer is 1 µm or less, close adherence of a heat-resistant layer and a substrate can be improved.

Note that the "volume-average particle diameter" referred to in the present disclosure is the "particle diameter (D50) at which, in a particle size distribution (by volume) measured by laser diffraction, cumulative volume calculated from a small diameter end of the distribution reaches 50%".

Moreover, the volume-average particle diameter of the particulate polymer can be adjusted by altering the type and/or amount of a monomer, polymerization initiator, and/or polymerization accelerator used in production of the particulate polymer, for example.

### «Production method of particulate polymer»

The polymerization method of the particulate polymer is not specifically limited and may, for example, be any of solution polymerization, suspension polymerization, bulk polymerization, emulsion polymerization, or the like. Moreover, the polymerization reaction may be addition polymerization such as ionic polymerization, radical polymerization, or living radical polymerization. The polymerization may be carried out with a commonly used polymerization solvent, emulsifier, dispersant, polymerization initiator, chain transfer agent, or the like, and the amount thereof may also be the same as commonly used.

Although no specific limitations are placed on the content ratio of the water-soluble polymer and the particulate polymer in the presently disclosed binder composition, the proportion constituted by the water-soluble polymer among the total content of the water-soluble polymer and the particulate polymer is preferably 15 mass% or more, more preferably 25 mass% or more, and even more preferably 30 mass% or more, and is preferably 70 mass% or less, more preferably 60 mass% or less, and even more preferably 50 mass% or less. Heat shrinkage resistance of a heat-resistant layer can be further improved when the proportion constituted by the water-soluble polymer among the total content of the water-soluble polymer and the particulate polymer is 15 mass% or more, whereas close adherence of a heat-resistant layer and a substrate can be increased when this proportion is 70 mass% or less.

### <Dispersion medium>

The dispersion medium of the presently disclosed binder composition is not specifically limited so long as it includes water. For example, the presently disclosed binder composition may contain just water as the dispersion medium or may contain a mixture of water and an organic solvent (for example, an ester, ketone, or alcohol) as the dispersion medium. Note that the presently disclosed binder composition may contain one organic solvent or may contain two or more organic solvents.

### <Other components>

Besides the components described above, the presently disclosed binder composition may contain reinforcing materials, leveling agents, wetting agents, dispersants, viscosity modifiers, additives for electrolyte solution, preservatives, fungicides, defoamers, polymerization inhibitors, and binders other than the water-soluble polymer and the particulate polymer according to the present disclosure. Commonly known examples of such components can be used without any specific limitations so long as they do not affect battery reactions. One other component may be used individually, or two or more other components may be used in combination in a freely selected ratio.

Examples of wetting agents that can be used include, but are not specifically limited to, ethylene oxide/propylene oxide surfactants (EO/PO surfactants), fluorine-containing surfactants, silicon-containing surfactants, and so forth. Of these wetting agents, EO/PO surfactants and fluorine-containing surfactants are preferable, and EO/PO surfactants are more preferable.

Examples of dispersants that can be used include, but are not specifically limited to, polycarboxylic acids such as polyacrylic acid, sodium polycarboxylates such as sodium polyacrylate, ammonium polycarboxylates such as ammonium polyacrylate, polycarboxylic acid-sulfonic acid copolymers, sodium polycarboxylate-sulfonate copolymers, and ammonium polycarboxylate-sulfonate copolymers. Of these dispersants, sodium polyacrylate is preferable.

Specific examples of other components besides the wetting agents and dispersants described above include, but are not specifically limited to, those described in WO2012/115096A1, for example.

### <Production of binder composition for non-aqueous secondary battery heat-resistant layer>

The presently disclosed binder composition can be produced by using a known method to mix the previously described water-soluble polymer and water, and also the particulate polymer and other components that are optionally used. Specifically, the binder composition can be produced by mixing the above-described components using a mixer such as a ball mill, a sand mill, a bead mill, a pigment disperser, a grinding machine, an ultrasonic disperser, a homogenizer, a planetary mixer, or a FILMIX.

Note that in a case in which the water-soluble polymer or the optional particulate polymer is produced through polymerization in an aqueous solvent, the water-soluble polymer or particulate polymer may be mixed while still in the form of an aqueous solution or water dispersion so as to produce the binder composition containing water as a solvent.

Moreover, the optional particulate polymer may be added after mixing of the water-soluble polymer and non-conductive inorganic particles, for example, such that production of the binder composition and production of the subsequently described slurry composition are implemented at the same time.

### (Slurry composition for non-aqueous secondary battery heat-resistant layer)

The presently disclosed slurry composition is a composition that is for use in forming a heat-resistant layer, that contains non-conductive inorganic particles and the binder composition set forth above, and that optionally further contains other components. In other words, the presently disclosed slurry composition normally contains non-conductive inorganic particles, a water-soluble polymer, and water serving as a dispersion medium, and optionally further contains a particulate polymer and other components. As a result of containing the binder composition set forth above, the presently disclosed slurry composition has excellent dispersion stability and coatability, and enables formation of a heat-resistant layer having excellent heat shrinkage resistance through drying thereof on a substrate.

### <Non-conductive inorganic particles>

The non-conductive inorganic particles contained in the slurry composition for a heat-resistant layer are not specifically limited so long as they are particles formed of an inorganic material that is electrochemically stable and is stably present in the environment of use of a secondary battery. Examples of non-conductive inorganic particles that are preferable from such a viewpoint include particles of inorganic oxides such as aluminum oxide (alumina, Al₂O₃), hydrous aluminum oxide (boehmite, AlOOH), gibbsite (Al(OH)₃), silicon oxide, magnesium oxide (magnesia), magnesium hydroxide, calcium oxide, titanium oxide (titania), barium titanate (BaTiO₃), ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clays such as talc and montmorillonite. Of these examples, particles formed of alumina (alumina particles), particles formed of boehmite (boehmite particles), and particles formed of barium sulfate (barium sulfate particles) are preferable as the non-conductive inorganic particles from a viewpoint of causing good adsorption of the water-soluble polymer and the particulate polymer and improving close adherence of a heat-resistant layer and a substrate, and alumina particles and barium sulfate particles are more preferable as the non-conductive inorganic particles.

These particles may be subjected to element substitution, surface treatment, solid solution treatment, or the like as necessary. One of these types of particles may be used individually, or two or more of these types of particles may be used in combination.

### <Binder composition>

The binder composition is the presently disclosed binder composition set forth above, which contains a water-soluble polymer, water, and an optional particulate polymer and other components.

The content of the specific water-soluble polymer described above in the slurry composition is preferably 0.5 parts by mass or more, and more preferably 1 part by mass or more in terms of solid content per 100 parts by mass of the non-conductive inorganic particles from a viewpoint of even further increasing heat shrinkage resistance of a heat-resistant layer. Moreover, the content of the water-soluble polymer in the slurry composition is preferably 5 parts by mass or less, and more preferably 3 parts by mass or less in terms of solid content per 100 parts by mass of the non-conductive inorganic particles from a viewpoint of improving cycle characteristics of a secondary battery.

Furthermore, the content of the previously described particulate polymer in the slurry composition is preferably 1 part by mass or more, more preferably 1.2 parts by mass or more, and even more preferably 1.4 parts by mass or more in terms of solid content per 100 parts by mass of the non-conductive inorganic particles from a viewpoint of improving close adherence of a heat-resistant layer and a substrate. Also, the content of the particulate polymer in the slurry composition is preferably 20 parts by mass or less, more preferably 10 parts by mass or less, and even more preferably 7 parts by mass or less in terms of solid content per 100 parts by mass of the non-conductive inorganic particles from a viewpoint of improving cycle characteristics of a secondary battery.

### <Other components>

Examples of other components that may be contained in the slurry composition include, but are not specifically limited to, the same other components as may be contained in the presently disclosed binder composition. One other component may be used individually, or two or more other components may be used in combination in a freely selected ratio.

The content of the previously described wetting agent in the slurry composition is preferably 0.01 parts by mass or more, more preferably 0.05 parts by mass or more, and even more preferably 0.1 parts by mass or more per 100 parts by mass of the non-conductive inorganic particles, and is preferably 5 parts by mass or less, more preferably 3 parts by mass or less, and even more preferably 1 part by mass or less per 100 parts by mass of the non-conductive inorganic particles. When the content of the wetting agent is 0.01 parts by mass or more per 100 parts by mass of the non-conductive inorganic particles, wettability with respect to a substrate improves, and cissing is inhibited, which makes it possible to even further increase coatability of the slurry composition. Moreover, when the content of the wetting agent is 5 parts by mass or less per 100 parts by mass of the non-conductive inorganic particles, cycle characteristics of a secondary battery can be improved.

The content of the previously described dispersant in the slurry composition is preferably 0.1 parts by mass or more, more preferably 0.2 parts by mass or more, and even more preferably 0.3 parts by mass or more per 100 parts by mass of the non-conductive inorganic particles, and is preferably 5 parts by mass or less, more preferably 3 parts by mass or less, and even more preferably 1 part by mass of less per 100 parts by mass of the non-conductive inorganic particles. When the content of the dispersant is 0.1 parts by mass or more per 100 parts by mass of the non-conductive inorganic particles, dispersion stability of the slurry composition can be further improved, and heat shrinkage resistance of a heat-resistant layer can be even further increased. Moreover, when the content of the dispersant is 5 parts by mass or less per 100 parts by mass of the non-conductive inorganic particles, the amount of water remaining in a heat-resistant layer formed using the slurry composition can be reduced, and cycle characteristics of a secondary battery can be improved.

### <Production of slurry composition for non-aqueous secondary battery heat-resistant layer>

The slurry composition set forth above can be produced by mixing the above-described components by a known mixing method. This mixing can be performed using a mixer such as a ball mill, a sand mill, a bead mill, a pigment disperser, a grinding machine, an ultrasonic disperser, a homogenizer, a planetary mixer, or a FILMIX, for example.

### (Heat-resistant layer for non-aqueous secondary battery)

The presently disclosed heat-resistant layer is a layer that is formed from the presently disclosed slurry composition set forth above. For example, the presently disclosed heat-resistant layer can be formed by applying the slurry composition set forth above onto the surface of a suitable substrate to form a coating film, and subsequently drying the coating film that has been formed. In other words, the presently disclosed heat-resistant layer is formed of a dried product of the slurry composition set forth above and normally contains at least non-conductive inorganic particles and a water-soluble polymer. Note that components contained in the heat-resistant layer are components that were contained in the slurry composition set forth above, and the preferred ratio of these components is the same as the preferred ratio of the components in the slurry composition.

The presently disclosed heat-resistant layer has excellent heat shrinkage resistance as a result of being formed from the presently disclosed slurry composition containing the presently disclosed binder composition.

### <Substrate>

No limitations are placed on the substrate onto which the slurry composition is applied. For example, a coating film of the slurry composition may be formed on the surface of a releasable substrate, this coating film may be dried to form a heat-resistant layer, and then the releasable substrate may be peeled from the heat-resistant layer. The heat-resistant layer that is peeled from the releasable substrate in this manner can be used as a free-standing film in formation of a battery member of a secondary battery.

However, it is preferable that a separator substrate or an electrode substrate is used as the substrate from a viewpoint of raising battery member production efficiency since a step of peeling the heat-resistant layer can be omitted. Specifically, the slurry composition is preferably applied onto a separator substrate or an electrode substrate.

### «Separator substrate»

The separator substrate is not specifically limited and may be a known separator substrate such as an organic separator substrate. The organic separator substrate is a porous member that is made from an organic material. The organic separator substrate may, for example, be a microporous membrane or non-woven fabric containing a polyolefin resin such as polyethylene or polypropylene, an aromatic polyamide resin, or the like, and is preferably a microporous membrane or non-woven fabric made from polyethylene due to the excellent strength thereof.

### «Electrode substrate»

The electrode substrate (positive electrode substrate or negative electrode substrate) is not specifically limited and may, for example, be an electrode substrate obtained by forming an electrode mixed material layer containing an electrode active material and a binder on a current collector.

The current collector, the electrode active material (positive electrode active material or negative electrode active material) and the binder for an electrode mixed material layer (binder for a positive electrode mixed material layer or binder for a negative electrode mixed material layer) in the electrode mixed material layer, and the method by which the electrode mixed material layer is formed on the current collector can be known examples thereof such as any of those described in JP2013-145763A, for example.

### <Formation method of heat-resistant layer>

Examples of methods by which the heat-resistant layer may be formed on a substrate such as the separator substrate or the electrode substrate described above include:
(1) a method in which the presently disclosed slurry composition is applied onto the surface of the substrate (surface at the electrode mixed material layer-side in the case of the electrode substrate; same applies below) and is then dried;
(2) a method in which the substrate is immersed in the presently disclosed slurry composition and is then dried; and
(3) a method in which the presently disclosed slurry composition is applied onto a releasable substrate and is dried to produce a heat-resistant layer that is then transferred onto the surface of the substrate.

Of these methods, method (1) is particularly preferable since it allows simple control of the thickness of the heat-resistant layer. In more detail, method (1) includes a step of applying the slurry composition onto the substrate (application step) and a step of drying the slurry composition that has been applied onto the substrate to form a heat-resistant layer (drying step).

### «Application step»

Examples of methods by which the slurry composition can be applied onto the substrate in the application step include, but are not specifically limited to, doctor blading, reverse roll coating, direct roll coating, gravure coating, extrusion coating, and brush coating.

### «Drying step»

The method by which the slurry composition on the substrate is dried in the drying step may be a commonly known method without any specific limitations. Examples of drying methods that may be used include drying by warm, hot, or low-humidity air, drying in a vacuum, and drying through irradiation with infrared light, electron beams, or the like.

### (Non-aqueous secondary battery)

The presently disclosed secondary battery includes the presently disclosed heat-resistant layer set forth above. More specifically, the presently disclosed secondary battery includes a positive electrode, a negative electrode, a separator, and an electrolyte solution, and has the heat-resistant layer set forth above included in at least one battery member among the positive electrode, the negative electrode, and the separator.

### <Positive electrode, negative electrode, and separator>

At least one of the positive electrode, the negative electrode, and the separator used in the presently disclosed secondary battery is a battery member that includes the presently disclosed heat-resistant layer set forth above. Note that any known positive electrode, negative electrode, or separator can be used without any specific limitations as a positive electrode, negative electrode, or separator that does not include the presently disclosed heat-resistant layer.

### <Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region.

The concentration of the electrolyte in the electrolyte solution may be adjusted as appropriate. Furthermore, known additives may be added to the electrolyte solution.

### <Production method of non-aqueous secondary battery>

The presently disclosed non-aqueous secondary battery may be produced, for example, by stacking the positive electrode and the negative electrode with the separator in-between, performing rolling, folding, or the like of the resultant laminate as necessary in accordance with the battery shape, placing the laminate in a battery container, injecting the electrolyte solution into the battery container, and sealing the battery container. Note that at least one member among the positive electrode, the negative electrode, and the separator is a member that is equipped with a heat-resistant layer. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. In the examples and comparative examples, the following methods were used to evaluate the weight-average molecular weight of a water-soluble polymer, the glass-transition temperature and volume-average particle diameter of a particulate polymer, the dispersion stability and coatability of a slurry composition for a heat-resistant layer, the heat shrinkage resistance of a heat-resistant layer, the close adherence of a heat-resistant layer and a substrate, and the cycle characteristics of a secondary battery. <Weight-average molecular weight of water-soluble polymer>

An aqueous solution containing a water-soluble polymer that was produced in each example or comparative example was diluted so as to adjust the concentration thereof to 0.5%. Next, caustic soda was added until the pH reached 10 to 12, 1 hour of immersion was performed in a hot water bath of 80°C or higher, and then dilution to 0.025% was performed with the eluent indicated below so as to produce a sample. The sample was analyzed by gel permeation chromatography under the following conditions in order to determine the weight-average molecular weight of the water-soluble polymer.
Apparatus: Gel permeation chromatograph GPC (device No. GPC-26)
Detector: Differential refractive index detector RI (produced by Showa Denko K.K.; product name: RI-201; sensitivity: 32)
Column: TSKgel GMPWXL × 2 (Ø7.8 mm × 30 cm; produced by Tosoh Corporation)
Eluent: 0.1 M Tris buffer solution (pH 9; 0.1 M potassium chloride added)
Flow rate: 0.7 mL/min
Column temperature: 40°C
Injection volume: 0.2 mL

Reference sample: Monodisperse polyethylene oxide (PEO) and polyethylene glycol (PEG) produced by Tosoh Corporation and Sigma-Aldrich

### <Glass-transition temperature of particulate polymer>

A powdered sample obtained by drying a water dispersion containing a particulate polymer at a temperature of 25°C for 48 hours was used as a measurement sample. After weighing 10 mg of the measurement sample into an aluminum pan, measurement was implemented under conditions prescribed in JIS Z8703 using a differential scanning calorimeter (produced by SII NanoTechnology Inc.; product name: EXSTAR DSC6220) and with a measurement temperature range of -100°C to 200°C and a heating rate of 20°C/min to obtain a differential scanning calorimetry (DSC) curve. Note that an empty aluminum pan was used as a reference. The temperature at which a derivative signal (DDSC) exhibited a peak in the heating process was taken to be the glass-transition temperature (°C). Note that since multiple peaks were measured, the temperature at which a peak having large displacement was exhibited was taken to be the glass-transition temperature of the particulate polymer.

### <Volume-average particle diameter of particulate polymer>

The volume-average particle diameter of a particulate polymer was measured by laser diffraction. Specifically, a produced water dispersion containing the particulate polymer (adjusted to a solid content concentration of 0.1 mass%) was used as a sample. In a particle diameter distribution (by volume) measured using a laser diffraction particle size analyzer (produced by Beckman Coulter Inc.; product name: LS-13 320), the particle diameter D50 at which cumulative volume calculated from a small diameter end of the distribution reached 50% was taken to be the volume-average particle diameter.

### <Dispersion stability of slurry composition for heat-resistant layer>

After loading 1 kg of a slurry composition for a heat-resistant layer produced in each example or comparative example into a 1 L plastic bottle, the plastic bottle was left at rest for 10 days. A Mix Rotor was then used to perform stirring of the entire plastic bottle that had been left at rest. After this stirring, the slurry composition for a heat-resistant layer inside the plastic bottle was sampled at within 1 cm of the top, and the solid content concentration of the sampled supernatant was measured. The slurry composition in the plastic bottle after stirring was withdrawn from the bottle, and occurrence of adhesion to the bottom of the plastic bottle was checked and was evaluated as follows.
A: Solid content concentration of supernatant after stirring of 39.5% or more and no adhesion to bottom of plastic bottle
B: Solid content concentration of supernatant after stirring of 39.5% or more but adhesion to bottom of plastic bottle observed
C: Solid content concentration of supernatant after stirring of less than 39.5%

### <Coatability of slurry composition for heat-resistant layer>

The external appearance of a heat-resistant layer formed from a slurry composition for a heat-resistant layer produced in each example or comparative example was visually observed and was evaluated as follows.
A: Range over which aggregates, streaks, and/or cissing are not observed is 30 cm × 30 cm or more
B: Range over which aggregates, streaks, and/or cissing are not observed is not less than 10 cm × 10 cm and less than 30 cm × 30 cm
C: Range over which aggregates, streaks, and/or cissing are not observed is less than 10 cm × 10 cm

### <Heat shrinkage resistance of heat-resistant layer>

A heat-resistant layer-equipped separator produced in each example or comparative example was cut out as a square of 12 cm in width by 12 cm in length, and a square having a side length of 10 cm was drawn in an inner part of the cut out square to obtain a test specimen. The test specimen was placed inside a 150°C thermostatic tank and was left for 1 hour. Thereafter, the area change of the square drawn in the inner part (= {(area of square before being left - area of square after being left)/area of square before being left} × 100%) was determined as the heat shrinkage rate and was evaluated by the following standard. A smaller heat shrinkage rate indicates that a heat-resistant layer has better heat shrinkage resistance.
A: Heat shrinkage rate of less than 10%
B: Heat shrinkage rate of not less than 10% and less than 20%
C: Heat shrinkage rate of 20% or more

### <Close adherence of heat-resistant layer and substrate>

A heat-resistant layer-equipped separator produced in each example or comparative example was cut out as 10 mm in width by 50 mm in length to obtain a test specimen. Next, an SUS plate having double-sided tape (No. 5608 produced by Nitto Denko Corporation) affixed thereto was prepared, and the surface of the heat-resistant layer of the test specimen was affixed to the double-sided tape. One end of the separator substrate was pulled and peeled off at a speed of 50 mm/min such that the peeling face was at 180°, and the strength when the separator substrate was peeled off was measured. A higher peel strength indicates better close adherence of a heat-resistant layer and a substrate.
A: Peel strength of 60 N/m or more
B: Peel strength of not less than 30 N/m and less than 60 N/m
C: Peel strength of less than 30 N/m

### <Cycle characteristics of secondary battery>

A lithium ion secondary battery produced in each example or comparative example was left at rest in a 25°C environment for 24 hours. Thereafter, the lithium ion secondary battery was subjected to a charge/discharge operation of charging to 4.2 V (cut-off condition: 0.02C) by a constant current-constant voltage (CC-CV) method at a charge rate of 1C and then discharging to 3.0 V by a constant current (CC) method at a discharge rate of 1C, and the initial capacity C0 was measured.

The lithium ion secondary battery was repeatedly subjected to the same charge/discharge operation in a 25°C environment, and the capacity C1 after 300 cycles was measured. The capacity maintenance rate ΔC (= (C1/C0) × 100(%)) was calculated and was evaluated by the following standard. A higher capacity maintenance rate indicates a smaller decrease of discharge capacity, and thus indicates better cycle characteristics.
A: Capacity maintenance rate ΔC of 85% or more
B: Capacity maintenance rate ΔC of not less than 75% and less than
85%
C: Capacity maintenance rate ΔC of less than 75%

### (Example 1)

### <Production of aqueous solution containing water-soluble polymer>

A 10 L septum-equipped flask was charged with 6,335 g of deionized water and 190 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 939.8 g (74.0%) of acrylamide as an amide group-containing monomer, 127.0 g (10.0%) of acrylic acid as an acid group-containing monomer, and 203.2 g (16.0%) of N-hydroxyethylacrylamide as a hydroxyl group-containing monomer were mixed and were then injected into the flask by a syringe. Thereafter, 200 g of a 5.0% aqueous solution of ammonium persulfate as a polymerization initiator was added into the flask by a syringe, and the reaction temperature was set to 60°C. Once 2 hours had passed, 100 g of a 5.0% aqueous solution of ammonium persulfate as a polymerization initiator and 95 g of a 2.0% aqueous solution of L-ascorbic acid as a polymerization accelerator were added in order to further raise the reaction conversion rate. Once a further 2 hours had passed, 100 g of a 5.0% aqueous solution of ammonium persulfate as a polymerization initiator and 95 g of a 2.0% aqueous solution of L-ascorbic acid as a polymerization accelerator were added. Two hours later, 34 g of a 5% aqueous solution of sodium nitrite as a reaction inhibitor was added into the flask and was stirred. Thereafter, the flask was cooled to 40°C and was converted to an air atmosphere. The pH of the system was adjusted to 8.0 using 8% lithium hydroxide aqueous solution to thereby yield an aqueous solution containing a water-soluble polymer.

The weight-average molecular weight of the obtained water-soluble polymer was measured. The result is shown in Table 1.

### <Production of water dispersion containing particulate polymer>

A reactor including a stirrer was supplied with 70 parts of deionized water, 0.15 parts of sodium lauryl sulfate (produced by Kao Corporation; product name: EMAL^{®} 2F (EMAL is a registered trademark in Japan, other countries, or both)) as an emulsifier, and 0.5 parts of ammonium persulfate, the gas phase was purged with nitrogen gas, and the temperature was raised to 60°C.

Meanwhile, a monomer composition was obtained in a separate vessel by mixing 50 parts of deionized water, 0.5 parts of sodium dodecylbenzenesulfonate, 94.2 parts of n-butyl acrylate as a (meth)acrylic acid ester monomer, 2 parts of methacrylic acid as a hydrophilic group-containing monomer, 0.3 parts of allyl methacrylate and 1.5 parts of allyl glycidyl ether as cross-linkable monomers, and 2 parts of acrylonitrile as another monomer. The monomer composition was continuously added into the reactor over 4 hours to carry out polymerization. The reaction was carried out at 60°C during the addition. Once the addition was complete, a further 3 hours of stirring was performed at 70°C to complete the reaction and thereby yield a water dispersion containing a particulate polymer.

The glass-transition temperature and the volume-average particle diameter of the obtained particulate polymer were measured. The results are shown in Table 1.

### <Production of slurry composition for non-aqueous secondary battery heat-resistant layer>

Alumina particles (produced by Nippon Light Metal Co., Ltd.; product name: LS-256; volume-average particle diameter: 0.5 µm) were prepared as non-conductive inorganic particles, and sodium polyacrylate (produced by Toagosei Co., Ltd.; product name: ARON T-50) was prepared as a dispersant.

A dispersion liquid was obtained by mixing 100 parts of the non-conductive inorganic particles, 0.5 parts of the dispersant, and deionized water, and then treating the mixture for 1 hour using a bead mill (produced by Ashizawa Finetech Ltd.; product name: LMZ015). In addition, 2 parts of solid content of the aqueous solution containing the water-soluble polymer obtained as described above, 4 parts of solid content of the water dispersion containing the particulate polymer obtained as described above, and 0.3 parts of an ethylene oxide/propylene oxide surfactant (produced by San Nopco Limited; product name: NOPTECHS ED-052) as a wetting agent were mixed so as to produce a slurry composition for a heat-resistant layer having a solid content concentration of 40%. Note that this slurry composition for a heat-resistant layer contained a binder composition for a heat-resistant layer. In other words, production of a slurry composition for a heat-resistant layer and production of a binder composition for a heat-resistant layer were performed at the same time in this example.

The dispersion stability and coatability of the slurry composition for a heat-resistant layer obtained in this manner were evaluated. The results are shown in Table 1.

### <Production of separator>

A separator substrate made of polyethylene (produced by Asahi Kasei Corporation; product name: ND412; thickness: 12 µm) was prepared. The slurry composition for a heat-resistant layer produced as described above was applied onto the surface of the prepared separator substrate and was dried at a temperature of 50°C for 3 minutes to obtain a separator including a heat-resistant layer at one side (heat-resistant layer thickness: 2.5 µm).

The heat shrinkage resistance of the heat-resistant layer obtained in this manner and also the close adherence of the heat-resistant layer and the separator substrate were evaluated. The results are shown in Table 1.

### <Formation of negative electrode>

A 5 MPa pressure-resistant vessel equipped with a stirrer was charged with 33 parts of 1,3-butadiene as an aliphatic conjugated diene monomer, 3.5 parts of itaconic acid as a carboxy group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were sufficiently stirred and were then heated to 50°C to initiate polymerization. The polymerization reaction was quenched by cooling at the point at which the polymerization conversion rate reached 96% to yield a mixture containing a particulate binder (styrene-butadiene copolymer). The mixture was adjusted to pH 8 through addition of 5% sodium hydroxide aqueous solution and was then subjected to thermal-vacuum distillation to remove unreacted monomer. Thereafter, the mixture was cooled to 30°C or lower to yield a water dispersion containing a binder for a negative electrode.

A planetary mixer was charged with 48.75 parts of artificial graphite (theoretical capacity: 360 mAh/g) and 48.75 parts of natural graphite

(theoretical capacity: 360 mAh/g) as negative electrode active materials and 1 part (in terms of solid content) of carboxymethyl cellulose as a thickener. These materials were diluted to a solid content concentration of 60% with deionized water and were subsequently kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. The viscosity was then adjusted to 3,000 ± 500 mPa·s (measured by B-type viscometer at 25°C and 60 rpm) with deionized water to produce a slurry composition for a negative electrode mixed material layer.

The slurry composition for a negative electrode mixed material layer was applied onto the surface of copper foil of 15 µm in thickness serving as a current collector by a comma coater such as to have a coating weight of 11 ± 0.5 mg/cm². The copper foil having the slurry composition for a negative electrode mixed material layer applied thereon was subsequently conveyed inside an oven having a temperature of 80°C for 2 minutes and an oven having a temperature of 110°C for 2 minutes at a speed of 400 mm/min so as to dry the slurry composition on the copper foil and thereby obtain a negative electrode web having a negative electrode mixed material layer formed on the current collector.

Thereafter, the negative electrode mixed material layer-side of the produced negative electrode web was roll pressed with a line pressure of 11 t (tons) in an environment having a temperature of 25 ± 3°C to obtain a negative electrode having a negative electrode mixed material layer density of 1.60 g/cm³. The negative electrode was subsequently left in an environment having a temperature of 25 ± 3°C and a relative humidity of 50 ± 5% for 1 week.

### <Formation of positive electrode>

A slurry composition for a positive electrode mixed material layer was produced by loading 96 parts of an active material NMC111 (LiNi_{1/3}Co_{1/3}Mn_{1/3}O₂) based on a lithium complex oxide of Co-Ni-Mn as a positive electrode active material, 2 parts of acetylene black (produced by Denka Company Limited; product name HS-100) as a conductive material, and 2 parts of polyvinylidene fluoride (produced by Kureha Corporation; product name: KF-1100) as a binder for a positive electrode into a planetary mixer, further adding N-methyl-2-pyrrolidone (NMP) as a dispersion medium to adjust the total solid content concentration to 67%, and mixing these materials.

Next, the obtained slurry composition for a positive electrode mixed material layer was applied onto aluminum foil of 20 µm in thickness serving as a current collector by a comma coater such as to have a coating weight of 20 ± 0.5 mg/cm².

The aluminum foil was conveyed inside an oven having a temperature of 90°C for 2 minutes and an oven having a temperature of 120°C for 2 minutes at a speed of 200 mm/min so as to dry the slurry composition on the aluminum foil and thereby obtain a positive electrode web having a positive electrode mixed material layer formed on the current collector.

Thereafter, the positive electrode mixed material layer-side of the produced positive electrode web was roll pressed with a line pressure of 14 t (tons) in an environment having a temperature of 25 ± 3°C to obtain a positive electrode having a positive electrode mixed material layer density of 3.40 g/cm³. The positive electrode was subsequently left in an environment having a temperature of 25 ± 3°C and a relative humidity of 50 ± 5% for 1 week.

### <Production of lithium ion secondary battery>

The negative electrode, positive electrode, and separator were used to produce a wound cell (discharge capacity equivalent to 520 mAh) and were arranged inside aluminum packing. The inside of the aluminum packing was subsequently filled with LiPF₆ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) as an electrolyte solution. The aluminum packing was then closed by heat sealing at a temperature of 150°C to tightly seal an opening of the aluminum packing, and thereby produce a lithium ion secondary battery. This lithium ion secondary battery was used to evaluate cycle characteristics. The result is shown in Table 1.

### (Example 2)

An aqueous solution containing a water-soluble polymer, a water dispersion containing a particulate polymer, a slurry composition for a heat-resistant layer, a negative electrode, a positive electrode, a separator, and a lithium ion secondary battery were prepared or produced in the same way as in Example 1 with the exception that in production of the aqueous solution containing the water-soluble polymer, the amount of acrylamide as an amide group-containing monomer was changed to 889.0 g (70.0%), the amount of acrylic acid as an acid group-containing monomer was changed to 152.4 g (12.0%), and the amount of N-hydroxyethylacrylamide as a hydroxyl group-containing monomer was changed to 228.6 g (18.0%). Evaluations were conducted in the same manner as in Example 1. The results are shown in Table 1.

### (Example 3)

An aqueous solution containing a water-soluble polymer, a water dispersion containing a particulate polymer, a slurry composition for a heat-resistant layer, a negative electrode, a positive electrode, a separator, and a lithium ion secondary battery were prepared or produced in the same way as in Example 1 with the exception that in production of the aqueous solution containing the water-soluble polymer, the amount of acrylamide as an amide group-containing monomer was changed to 825.5 g (65.0%), the amount of acrylic acid as an acid group-containing monomer was changed to 139.7 g (11.0%), and the amount of N-hydroxyethylacrylamide as a hydroxyl group-containing monomer was changed to 304.8 g (24.0%). Evaluations were conducted in the same manner as in Example 1. The results are shown in Table 1.

### (Example 4)

An aqueous solution containing a water-soluble polymer, a water dispersion containing a particulate polymer, a slurry composition for a heat-resistant layer, a negative electrode, a positive electrode, a separator, and a lithium ion secondary battery were prepared or produced in the same way as in Example 1 with the exception that in production of the aqueous solution containing the water-soluble polymer, the amount of acrylamide as an amide group-containing monomer was changed to 825.5 g (65.0%), the amount of acrylic acid as an acid group-containing monomer was changed to 38.1 g (3.0%), and the amount of N-hydroxyethylacrylamide as a hydroxyl group-containing monomer was changed to 406.4 g (32.0%). Evaluations were conducted in the same manner as in Example 1. The results are shown in Table 1.

### (Example 5)

An aqueous solution containing a water-soluble polymer, a water dispersion containing a particulate polymer, a slurry composition for a heat-resistant layer, a negative electrode, a positive electrode, a separator, and a lithium ion secondary battery were prepared or produced in the same way as in Example 1 with the exception that in production of the aqueous solution containing the water-soluble polymer, the amount of acrylamide as an amide group-containing monomer was changed to 806.45 g (63.5%), the amount of acrylic acid as an acid group-containing monomer was changed to 215.9 g (17.0%), and the amount of N-hydroxyethylacrylamide as a hydroxyl group-containing monomer was changed to 247.65 g (19.5%). Evaluations were conducted in the same manner as in Example 1. The results are shown in Table 1.

### (Example 6)

An aqueous solution containing a water-soluble polymer, a water dispersion containing a particulate polymer, a slurry composition for a heat-resistant layer, a negative electrode, a positive electrode, a separator, and a lithium ion secondary battery were prepared or produced in the same way as in Example 1 with the exception that in production of the aqueous solution containing the water-soluble polymer, the amount of acrylamide as an amide group-containing monomer was changed to 1219.2 g (96.0%), the amount of acrylic acid as an acid group-containing monomer was changed to 17.78 g (1.4%), and the amount of N-hydroxyethylacrylamide as a hydroxyl group-containing monomer was changed to 33.02 g (2.6%). Evaluations were conducted in the same manner as in Example 1. The results are shown in Table 1.

### (Example 7)

An aqueous solution containing a water-soluble polymer, a water dispersion containing a particulate polymer, a slurry composition for a heat-resistant layer, a negative electrode, a positive electrode, a separator, and a lithium ion secondary battery were prepared or produced in the same way as in Example 1 with the exception that in production of the aqueous solution containing the water-soluble polymer, the amount of acrylamide as an amide group-containing monomer was changed to 939.8 g (74.0%), the amount of acrylic acid as an acid group-containing monomer was changed to 203.2 g (16.0%), and the amount of N-hydroxyethylacrylamide as a hydroxyl group-containing monomer was changed to 127.0 g (10.0%). Evaluations were conducted in the same manner as in Example 1. The results are shown in Table 1.

### (Example 8)

An aqueous solution containing a water-soluble polymer, a water dispersion containing a particulate polymer, a slurry composition for a heat-resistant layer, a negative electrode, a positive electrode, a separator, and a lithium ion secondary battery were prepared or produced in the same way as in Example 1 with the exception that in production of the aqueous solution containing the water-soluble polymer, the amount of acrylamide as an amide group-containing monomer was changed to 939.8 g (74.0%), the amount of acrylic acid as an acid group-containing monomer was changed to 63.5 g (5.0%), and the amount of N-hydroxyethylacrylamide as a hydroxyl group-containing monomer was changed to 266.7 g (21.0%). Evaluations were conducted in the same manner as in Example 1. The results are shown in Table 1.

### (Example 9)

A water dispersion containing a particulate polymer, a slurry composition for a heat-resistant layer, a negative electrode, a positive electrode, a separator, and a lithium ion secondary battery were prepared or produced in the same way as in Example 1 with the exception that an aqueous solution containing a water-soluble polymer that was produced as described below was used. Evaluations were conducted in the same manner as in Example 1. The results are shown in Table 1.

### <Production of aqueous solution containing water-soluble polymer>

A 10 L septum-equipped flask was charged with 6,335 g of deionized water and 95 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 939.8 g (74.0%) of acrylamide as an amide group-containing monomer, 127.0 g (10.0%) of acrylic acid as an acid group-containing monomer, and 203.2 g (16.0%) of N-hydroxyethylacrylamide as a hydroxyl group-containing monomer were mixed and were injected into the flask by a syringe. Thereafter, 100 g of a 5.0% aqueous solution of ammonium persulfate as a polymerization initiator was added into the flask by a syringe, and the reaction temperature was set to 60°C. Once 2 hours had passed, 50 g of a 5.0% aqueous solution of ammonium persulfate as a polymerization initiator and 47.5 g of a 2.0% aqueous solution of L-ascorbic acid as a polymerization accelerator were added in order to further raise the reaction conversion rate. Once a further 2 hours had passed, 50 g of a 5.0% aqueous solution of ammonium persulfate as a polymerization initiator and 47.5 g of a 2.0% aqueous solution of L-ascorbic acid as a polymerization accelerator were added. Two hours later, 34 g of a 5% aqueous solution of sodium nitrite as a reaction inhibitor was added into the flask and was stirred. Thereafter, the flask was cooled to 40°C and was converted to an air atmosphere. The pH of the system was adjusted to 8.0 using 8% lithium hydroxide aqueous solution to thereby yield an aqueous solution containing a water-soluble polymer.

### (Example 10)

A water dispersion containing a particulate polymer, a slurry composition for a heat-resistant layer, a negative electrode, a positive electrode, a separator, and a lithium ion secondary battery were prepared or produced in the same way as in Example 1 with the exception that an aqueous solution containing a water-soluble polymer that was produced as described below was used. Evaluations were conducted in the same manner as in Example 1. The results are shown in Table 1.

### <Production of aqueous solution containing water-soluble polymer>

A 10 L septum-equipped flask was charged with 6,335 g of deionized water and 285 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 939.8 g (74.0%) of acrylamide as an amide group-containing monomer, 127.0 g (10.0%) of acrylic acid as an acid group-containing monomer, and 203.2 g (16.0%) of N-hydroxyethylacrylamide as a hydroxyl group-containing monomer were mixed and were injected into the flask by a syringe. Thereafter, 300 g of a 5.0% aqueous solution of ammonium persulfate as a polymerization initiator was added into the flask by a syringe, and the reaction temperature was set to 60°C. Once 2 hours had passed, 150 g of a 5.0% aqueous solution of ammonium persulfate as a polymerization initiator and 142.5 g of a 2.0% aqueous solution of L-ascorbic acid as a polymerization accelerator were added in order to further raise the reaction conversion rate. Once a further 2 hours had passed, 150 g of a 5.0% aqueous solution of ammonium persulfate as a polymerization initiator and 142.5 g of a 2.0% aqueous solution of L-ascorbic acid as a polymerization accelerator were added. Two hours later, 34 g of a 5% aqueous solution of sodium nitrite as a reaction inhibitor was added into the flask and was stirred. Thereafter, the flask was cooled to 40°C and was converted to an air atmosphere. The pH of the system was adjusted to 8.0 using 8% lithium hydroxide aqueous solution to thereby yield an aqueous solution containing a water-soluble polymer.

### (Example 11)

A water dispersion containing a particulate polymer, a slurry composition for a heat-resistant layer, a negative electrode, a positive electrode, a separator, and a lithium ion secondary battery were prepared or produced in the same way as in Example 1 with the exception that an aqueous solution containing a water-soluble polymer that was produced as described below was used. Evaluations were conducted in the same manner as in Example 1. The results are shown in Table 1.

### <Production of aqueous solution containing water-soluble polymer>

A 10 L septum-equipped flask was charged with 6,335 g of deionized water and 66.5 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 939.8 g (74.0%) of acrylamide as an amide group-containing monomer, 127.0 g (10.0%) of acrylic acid as an acid group-containing monomer, and 203.2 g (16.0%) of N-hydroxyethylacrylamide as a hydroxyl group-containing monomer were mixed and were injected into the flask by a syringe. Thereafter, 75 g of a 5.0% aqueous solution of ammonium persulfate as a polymerization initiator was added into the flask by a syringe, and the reaction temperature was set to 60°C. Once 2 hours had passed, 35 g of a 5.0% aqueous solution of ammonium persulfate as a polymerization initiator and 33.3 g of a 2.0% aqueous solution of L-ascorbic acid as a polymerization accelerator were added in order to further raise the reaction conversion rate. Once a further 2 hours had passed, 35 g of a 5.0% aqueous solution of ammonium persulfate as a polymerization initiator and 33.3 g of a 2.0% aqueous solution of L-ascorbic acid as a polymerization accelerator were added. Two hours later, 34 g of a 5% aqueous solution of sodium nitrite as a reaction inhibitor was added into the flask and was stirred. Thereafter, the flask was cooled to 40°C and was converted to an air atmosphere. The pH of the system was adjusted to 8.0 using 8% lithium hydroxide aqueous solution to thereby yield an aqueous solution containing a water-soluble polymer.

### (Example 12)

In production of an aqueous solution containing a water-soluble polymer, the amount of acrylamide as an amide group-containing monomer was changed to 933.45 g (73.5%), the amount of acrylic acid as an acid group-containing monomer was changed to 120.65 g (9.5%), and 215.9 g (17.0%) of 2-hydroxyethyl methacrylate was used instead of 203.2 g (16.0%) of N-hydroxyethylacrylamide as a hydroxyl group-containing monomer. Moreover, the amount of a water dispersion containing a particulate polymer that was used in production of a slurry composition for a heat-resistant layer was changed to 3 parts of solid content. With the exception of the above, an aqueous solution containing a water-soluble polymer, a water dispersion containing a particulate polymer, a slurry composition for a heat-resistant layer, a negative electrode, a positive electrode, a separator, and a lithium ion secondary battery were prepared or produced in the same way as in Example 1. Evaluations were conducted in the same manner as in Example 1. The results are shown in Table 1.

### (Example 13)

In production of an aqueous solution containing a water-soluble polymer, 2-hydroxyethyl acrylate was used instead of N-hydroxyethylacrylamide as a hydroxyl group-containing monomer. Moreover, the amount of a water dispersion containing a particulate polymer that was used in production of a slurry composition for a heat-resistant layer was changed to 3 parts of solid content. With the exception of the above, an aqueous solution containing a water-soluble polymer, a water dispersion containing a particulate polymer, a slurry composition for a heat-resistant layer, a negative electrode, a positive electrode, a separator, and a lithium ion secondary battery were prepared or produced in the same way as in Example 1. Evaluations were conducted in the same manner as in Example 1. The results are shown in Table 2.

### (Example 14)

An aqueous solution containing a water-soluble polymer, a slurry composition for a heat-resistant layer, a negative electrode, a positive electrode, a separator, and a lithium ion secondary battery were prepared or produced in the same way as in Example 1 with the exception that in production of the slurry composition for a heat-resistant layer, a water dispersion containing a particulate polymer was not added, and the amount of the aqueous solution containing the water-soluble polymer was changed to 4 parts of solid content. Evaluations were conducted in the same manner as in Example 1. The results are shown in Table 2.

### (Example 15)

An aqueous solution containing a water-soluble polymer, a water dispersion containing a particulate polymer, a slurry composition for a heat-resistant layer, a negative electrode, a positive electrode, a separator, and a lithium ion secondary battery were prepared or produced in the same way as in Example 1 with the exception that in production of the slurry composition for a heat-resistant layer, the amount of the water dispersion containing the particulate polymer was changed to 1.3 parts of solid content. Evaluations were conducted in the same manner as in Example 1. The results are shown in Table 2.

### (Example 16)

An aqueous solution containing a water-soluble polymer, a slurry composition for a heat-resistant layer, a negative electrode, a positive electrode, a separator, and a lithium ion secondary battery were prepared or produced in the same way as in Example 1 with the exception that a water dispersion containing a particulate polymer that was produced as described below was used. Evaluations were conducted in the same manner as in Example 1. The results are shown in Table 2.

### <Production of water dispersion containing particulate polymer>

A reactor including a stirrer was supplied with 70 parts of deionized water and 0.5 parts of ammonium persulfate. The gas phase of the reactor was purged with nitrogen gas and the temperature was raised to 60°C. Meanwhile, a monomer composition was obtained in a separate vessel by mixing 50 parts of deionized water, 0.5 parts of polyoxyethylene lauryl ether (produced by Kao Corporation; product name: EMULGEN^{®} 120 (EMULGEN is a registered trademark in Japan, other countries, or both)) as an emulsifier, 65 parts of 2-ethylhexyl acrylate as a (meth)acrylic acid ester monomer, 30 parts of styrene as another monomer, 1.7 parts of allyl glycidyl ether and 0.3 parts of allyl methacrylate as cross-linkable monomers, and 3 parts of methacrylic acid as a hydrophilic group-containing monomer.

The monomer composition was continuously added into the reactor over 4 hours to carry out polymerization. The reaction was carried out at 70°C during the continuous addition. Once the continuous addition was complete, a further 3 hours of stirring was performed at 80°C to complete the reaction and thereby yield a water dispersion of a particulate polymer.

The obtained water dispersion of the particulate polymer was cooled to 25°C, was subsequently adjusted to pH 8.0 through addition of sodium hydroxide aqueous solution, and then unreacted monomer was removed therefrom through introduction of steam. Thereafter, adjustment of solid content concentration was performed with deionized water while performing filtration using a 200-mesh (opening size: approximately 77 µm) screen made of stainless steel to obtain a water dispersion (solid content concentration: 40%) containing the particulate polymer.

### (Example 17)

An aqueous solution containing a water-soluble polymer, a slurry composition for a heat-resistant layer, a negative electrode, a positive electrode, a separator, and a lithium ion secondary battery were prepared or produced in the same way as in Example 1 with the exception that a water dispersion containing a particulate polymer that was produced as described below was used. Evaluations were conducted in the same manner as in Example 1. The results are shown in Table 2.

### <Production of water dispersion containing particulate polymer>

A reactor including a stirrer was supplied with 70 parts of deionized water, 0.20 parts of polyoxyethylene lauryl ether (produced by Kao Corporation; product name: EMULGEN^{®} 120) as an emulsifier, and 0.5 parts of ammonium persulfate. The gas phase of the reactor was purged with nitrogen gas and the temperature was raised to 60°C. Meanwhile, a monomer composition was obtained in a separate vessel by mixing 50 parts of deionized water, 0.5 parts of polyoxyethylene lauryl ether (produced by Kao Corporation; product name: EMULGEN^{®} 120) as an emulsifier, 70 parts of 2-ethylhexyl acrylate as a (meth)acrylic acid ester monomer, 25 parts of styrene as another monomer, 1.7 parts of allyl glycidyl ether and 0.3 parts of allyl methacrylate as cross-linkable monomers, and 3 parts of methacrylic acid as a hydrophilic group-containing monomer.

The monomer composition was continuously added into the reactor over 4 hours to carry out polymerization. The reaction was carried out at 70°C during the continuous addition. Once the continuous addition was complete, a further 3 hours of stirring was performed at 80°C to complete the reaction and thereby yield a water dispersion of a particulate polymer.

The obtained water dispersion of the particulate polymer was cooled to 25°C, was subsequently adjusted to pH 8.0 through addition of sodium hydroxide aqueous solution, and then unreacted monomer was removed therefrom through introduction of steam. Thereafter, adjustment of solid content concentration was performed with deionized water while performing filtration using a 200-mesh (opening size: approximately 77 µm) screen made of stainless steel to obtain a water dispersion (solid content concentration: 40%) containing the particulate polymer.

### (Example 18)

An aqueous solution containing a water-soluble polymer, a water dispersion containing a particulate polymer, a slurry composition for a heat-resistant layer, a negative electrode, a positive electrode, a separator, and a lithium ion secondary battery were prepared or produced in the same way as in Example 1 with the exception that in production of the slurry composition for a heat-resistant layer, barium sulfate particles (produced by Takehara Kagaku Kogyo Co., Ltd.; product name: TS-3; volume-average particle diameter: 0.5 µm) were used instead of alumina particles as non-conductive inorganic particles. Evaluations were conducted in the same manner as in Example 1. The results are shown in Table 2.

### (Comparative Example 1)

A water dispersion containing a particulate polymer, a slurry composition for a heat-resistant layer, a negative electrode, a positive electrode, a separator, and a lithium ion secondary battery were prepared or produced in the same way as in Example 1 with the exception that an aqueous solution containing a water-soluble polymer that was produced as described below was used. Evaluations were conducted in the same manner as in Example 1. The results are shown in Table 2.

### <Production of aqueous solution containing water-soluble polymer>

A 10 L septum-equipped flask was charged with a monomer composition containing 895.0 g (89.5%) of acrylamide and 15.0 g (1.5%) of dimethylacrylamide as amide group-containing monomers and 90.0 g (9.0%) of acrylic acid as an acid group-containing monomer, and also with 3,650 g of deionized water and 50 g of isopropyl alcohol, and the inside of the flask was purged with nitrogen gas at a flow rate of 100 mL/min. Next, 70 g of 5% ammonium persulfate aqueous solution and 30 g of 5% sodium bisulfite aqueous solution as polymerization initiators were added under stirring, and then the temperature was raised from room temperature to 80°C and was held thereat for 3 hours. Thereafter, 1,620 g of deionized water was added, and the pH was adjusted to 8 with 10% sodium hydroxide aqueous solution to yield an aqueous solution containing a water-soluble polymer.

### (Comparative Example 2)

An aqueous solution containing a water-soluble polymer, a water dispersion containing a particulate polymer, a slurry composition for a heat-resistant layer, a negative electrode, a positive electrode, a separator, and a lithium ion secondary battery were prepared or produced in the same way as in Example 1 with the exception that in production of the aqueous solution containing the water-soluble polymer, acrylic acid as an acid group-containing monomer and N-hydroxyethylacrylamide as a hydroxyl group-containing monomer were not added, and the amount of acrylamide as an amide group-containing monomer was changed to 1,270 g (100%). Evaluations were conducted in the same manner as in Example 1. The results are shown in Table 2.

### (Comparative Example 3)

A water dispersion containing a particulate polymer, a slurry composition for a heat-resistant layer, a negative electrode, a positive electrode, a separator, and a lithium ion secondary battery were prepared or produced in the same way as in Example 1 with the exception that an aqueous solution containing a water-soluble polymer that was produced as described below was used. Evaluations were conducted in the same manner as in Example 1. The results are shown in Table 2.

### <Production of aqueous solution containing water-soluble polymer>

A 10 L septum-equipped flask was charged with 6,335 g of deionized water and 95 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 635.0 g (50.0%) of acrylamide and 127.0 g (10.0%) of methacrylamide as amide group-containing monomers, 317.5 g (25.0%) of acrylic acid and 63.5 g (5.0%) of 2-acrylamido-2-methylpropane sulfonic acid as acid group-containing monomers, 63.5 g (5.0%) of 2-hydroxyethyl methacrylate as a hydroxyl group-containing monomer, and 63.5 g (5.0%) of methacrylonitrile as another monomer were mixed and were injected into the flask by a syringe. Thereafter, 100 g of a 5.0% aqueous solution of ammonium persulfate as a polymerization initiator was added into the flask by a syringe, and the reaction temperature was set to 60°C. Once 2 hours had passed, 50 g of a 5.0% aqueous solution of ammonium persulfate as a polymerization initiator and 47.5 g of a 2.0% aqueous solution of L-ascorbic acid as a polymerization accelerator were added in order to further raise the reaction conversion rate. Once a further 2 hours had passed, 50 g of a 5.0% aqueous solution of ammonium persulfate as a polymerization initiator and 47.5 g of a 2.0% aqueous solution of L-ascorbic acid as a polymerization accelerator were added. Two hours later, 34 g of a 5% aqueous solution of sodium nitrite as a reaction inhibitor was added into the flask and was stirred. Thereafter, the flask was cooled to 40°C and was converted to an air atmosphere. The pH of the system was adjusted to 8.0 using 8% lithium hydroxide aqueous solution.

### (Comparative Example 4)

A water dispersion containing a particulate polymer, a slurry composition for a heat-resistant layer, a negative electrode, a positive electrode, a separator, and a lithium ion secondary battery were prepared or produced in the same way as in Example 1 with the exception that an aqueous solution containing a water-soluble polymer that was produced as described below was used. Evaluations were conducted in the same manner as in Example 1. The results are shown in Table 2.

### <Production of aqueous solution containing water-soluble polymer>

A 10 L septum-equipped flask was charged with 6,335 g of deionized water and 95 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 571.5 g (45.0%) of acrylamide as an amide group-containing monomer, 317.5 g (25.0%) of acrylic acid as an acid group-containing monomer, and 381.0 g (30.0%) of N-hydroxyethylacrylamide as a hydroxyl group-containing monomer were mixed and were injected into the flask by a syringe. Thereafter, 100 g of a 5.0% aqueous solution of ammonium persulfate as a polymerization initiator was added into the flask by a syringe, and the reaction temperature was set to 60°C. Once 2 hours had passed, 50 g of a 5.0% aqueous solution of ammonium persulfate as a polymerization initiator and 47.5 g of a 2.0% aqueous solution of L-ascorbic acid as a polymerization accelerator were added in order to further raise the reaction conversion rate. Once a further 2 hours had passed, 50 g of a 5.0% aqueous solution of ammonium persulfate as a polymerization initiator and 47.5 g of a 2.0% aqueous solution of L-ascorbic acid as a polymerization accelerator were added. Two hours later, 34 g of a 5% aqueous solution of sodium nitrite as a reaction inhibitor was added into the flask and was stirred. Thereafter, the flask was cooled to 40°C and was converted to an air atmosphere. The pH of the system was adjusted to 8.0 using 8% lithium hydroxide aqueous solution to thereby yield an aqueous solution containing a water-soluble polymer.

### (Comparative Example 5)

An aqueous solution containing a water-soluble polymer, a water dispersion containing a particulate polymer, a slurry composition for a heat-resistant layer, a negative electrode, a positive electrode, a separator, and a lithium ion secondary battery were prepared or produced in the same way as in Example 1 with the exception that in production of the aqueous solution containing the water-soluble polymer, the amount of acrylamide as an amide group-containing monomer was changed to 946.15 g (74.5%), the amount of acrylic acid as an acid group-containing monomer was changed to 6.35 g (0.5%), and the amount of N-hydroxyethylacrylamide as a hydroxyl group-containing monomer was changed to 317.5 g (25.0%). Evaluations were conducted in the same manner as in Example 1. The results are shown in Table 2.

In Tables 1 and 2, shown below:
"AAm" indicates acrylamide unit;
"DMAAm" indicates dimethylacrylamide unit;
"MAAm" indicates methacrylamide unit;
"AA" indicates acrylic acid unit;
"ATBS" indicates 2-acrylamido-2-methylpropane sulfonic acid unit;
"HEAAm" indicates N-hydroxyethylacrylamide unit;
"HEMA" indicates 2-hydroxyethyl methacrylate unit;
"HEA" indicates 2-hydroxyethyl acrylate unit;
"MAN" indicates methacrylonitrile unit;
"BA" indicates n-butyl acrylate unit;
"2EHA" indicates 2-ethylhexyl acrylate unit;
"MAA" indicates methacrylic acid unit;
"AGE" indicates allyl glycidyl ether unit;
"AMA" indicates allyl methacrylate unit;
"AN" indicates acrylonitrile unit;
"ST" indicates styrene unit;
"Al₂O₃" indicates alumina particles; and
"BaSO₄" indicates barium sulfate particles.

**Table 1**

| | | | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|---|
| | | | Amide group-containing monomer unit | Type | AAm | AAm | AAm | AAm | AAm | AAm | AAm | AAm | AAm | AAm | AAm | AAm |
| | | | | Proportional content [mass%] | 74 | 70 | 65 | 65 | 63.5 | 96 | 74 | 74 | 74 | 74 | 74 | 73.5 |
| | | | | Type | - | - | - | - | - | - | - | - | - | - | - | - |
| | | | | Proportional content [mass%] | - | - | - | - | - | - | - | - | - | - | - | - |
| | | | Acid group-containing monomer unit | Type | AA | AA | AA | AA | AA | AA | AA | AA | AA | AA | AA | AA |
| | | | | Proportional content [mass%] | 10 | 12 | 11 | 3 | 17 | 1.4 | 16 | 5 | 10 | 10 | 10 | 9.5 |
| | | Water-soluble | | Type | - | - | - | - | - | - | - | - | - | - | - | - |
| | | polymer | | Proportional content [mass%] | - | - | - | - | - | - | - | - | - | - | - | - |
| | | | Hydroxyl group-containing monomer unit | Type | HEAAm | HEAAm | HEAAm | HEAAm | HEAAm | HEAAm | HEAAm | HEAAm | HEAAm | HEAAm | HEAAm | HEMA |
| | | | | Proportional content [mass%] | 16 | 18 | 24 | 32 | 19.5 | 2.6 | 10 | 21 | 16 | 16 | 16 | 17 |
| | | | Other monomer unit | Type | - | - | - | - | - | - | - | - | - | - | - | - |
| | | | | Proportional content [mass%] | - | - | - | - | - | - | - | - | - | - | - | - |
| | | | Hydroxyl group/acid group molar ratio | | 1.00 | 0.94 | 1.37 | 6.68 | 0.72 | 1.16 | 0.39 | 2.63 | 1.00 | 1.00 | 1.00 | 0.99 |
| | Binder composition | | Weight-average molecular weight | | 500 × 10³ | 500 × 10³ | 500 × 10³ | 500 × 10³ | 500 × 10³ | 500 × 10³ | 500 × 10³ | 500 × 10³ | 1200 × 10³ | 280 × 10³ | 1800 × 10³ | 500 × 10³ |
| Slurry composition | | | Content parts by mass] | | 2 | 2 | 2 | 2 | 2 | 2 | 2 | 2 | 2 | 2 | 2 | 2 |
| | | | (Meth)acrylic acid ester monomer unit | Type | BA | BA | BA | BA | BA | BA | BA | BA | BA | BA | BA | BA |
| | | | | Proportional content [mass%] | 94.2 | 94.2 | 94.2 | 94.2 | 94.2 | 94.2 | 94.2 | 94.2 | 94.2 | 94.2 | 94.2 | 94.2 |
| | | | Hydrophilic group-containing monomer unit | Type | MAA | MAA | MAA | MAA | MAA | MAA | MAA | MAA | MAA | MAA | MAA | MAA |
| | | | | Proportional content [mass%] | 2 | 2 | 2 | 2 | 2 | 2 | 2 | 2 | 2 | 2 | 2 | 2 |
| | | | Cross-linkable monomer unit | Type | AGE | AGE | AGE | AGE | AGE | AGE | AGE | AGE | AGE | AGE | AGE | AGE |
| | | Particulate | | Proportional content [mass%] | 1.5 | 1.5 | 1.5 | 1.5 | 1.5 | 1.5 | 1.5 | 1.5 | 1.5 | 1.5 | 1.5 | 1.5 |
| | | polymer | | Type | AMA | AMA | AMA | AMA | AMA | AMA | AMA | AMA | AMA | AMA | AMA | AMA |
| | | | | Proportional content [mass%] | 0.3 | 0.3 | 0.3 | 0.3 | 0.3 | 0.3 | 0.3 | 0.3 | 0.3 | 0.3 | 0.3 | 0.3 |
| | | | Other monomer unit | Type | AN | AN | AN | AN | AN | AN | AN | AN | AN | AN | AN | AN |
| | | | | Proportional content [mass%] | 2 | 2 | 2 | 2 | 2 | 2 | 2 | 2 | 2 | 2 | 2 | 2 |
| | | | Glass-transition temperature [°C] | | -40 | -40 | -40 | -40 | -40 | -40 | -40 | -40 | -40 | -40 | -40 | -40 |
| | | | Volume-average particle diameter [µm] | | 0.36 | 0.36 | 0.36 | 0.36 | 0.36 | 0.36 | 0.36 | 0.36 | 0.36 | 0.36 | 0.36 | 0.36 |
| | | | Content [parts by mass] | | 4 | 4 | 4 | 4 | 4 | 4 | 4 | 4 | 4 | 4 | 4 | 3 |
| | Non-conductive inorganic particles | | Type | | Al₂O₃ | Al₂O₃ | Al₂O₃ | Al₂O₃ | Al₂O₃ | Al₂O₃ | Al₂O₃ | Al₂O₃ | Al₂O₃ | Al₂O₃ | Al₂O₃ | Al₂O₃ |
| | | | Content [parts by mass] | | 100 | 100 | 100 | 100 | 100 | 100 | 100 | 100 | 100 | 100 | 100 | 100 |
| Evaluation | Dispersion stability | | | | A | A | A | A | B | B | B | A | A | A | A | A |
| | Coatability | | | | A | A | A | B | A | B | B | B | B | A | B | A |
| | Heat shrinkage resistance | | | | A | B | B | B | B | A | A | A | A | B | A | B |
| | Cbse adherence | | | | A | A | A | B | A | B | A | B | A | A | A | A |
| | Cycle characteristics | | | | A | A | A | A | A | A | A | A | A | A | A | B |

**Table 2**

| | | | | | Example 13 | Example 14 | Example 15 | Example 16 | Example 17 | Example 18 | Comparative Example 1 | Comparative Example 2 | Comparative Example 3 | Comparative Example 4 | Comparative Example 5 |
|---|---|---|---|---|---|---|---|---|---|---|---|---|---|---|---|
| | | | Amide group-containing monomer unit | Type | AAm | AAm | AAm | AAm | AAm | AAm | AAm | AAm | AAm | AAm | AAm |
| | | | | Proportional content [mass%] | 74 | 74 | 74 | 74 | 74 | 74 | 89.5 | 100 | 50 | 45 | 74.5 |
| | | | | Type | - | - | - | - | - | - | DMAAm | - | MAAm | - | - |
| | | | | Proportional content [mass%] | - | - | - | - | - | - | 1.5 | - | 10 | - | - |
| | | | Acid group-containing monomer unit | Type | AA | AA | AA | AA | AA | AA | AA | - | AA | AA | AA |
| | | | | Proportional content [mass%] | 10 | 10 | 10 | 10 | 10 | 10 | 9 | - | 25 | 25 | 0.5 |
| | | | | Type | - | - | - | - | - | - | - | - | ATBS | - | - |
| | | | | Proportional content [mass%] | - | - | - | - | - | - | - | - | 5 | - | - |
| | | Water-soluble polymer | Hydroxyl group-containing monomer unit | Type | HEA | HEAAm | HEAAm | HEAAm | HEAAm | HEAAm | - | - | HEMA | HEAAm | HEAAm |
| | | | | Proportional content [mass%] | 16 | 16 | 16 | 16 | 16 | 16 | - | - | 5 | 30 | 25 |
| | | | Other monomer unit | Type | - | - | - | - | - | - | - | - | MAN | - | - |
| | | | | Proportional content [mass%] | - | - | - | - | - | - | - | - | 5 | - | - |
| | | | Hydroxyl group/acid group molar ratio | | 0.99 | 1.00 | 1.00 | 1.00 | 1.00 | 1.00 | - | - | 0.10 | 0.75 | 31.29 |
| | Binder | | Weight-average molecular weight | | 500 × 10³ | 500 × 10³ | 500 × 10³ | 500 × 10³ | 500 × 10³ | 500 × 10³ | 360 × 10³ | 500 × 10³ | 1000 × 10³ | 1000 × 10³ | 500 × 10³ |
| Slurry | composition | | Content parts by mass] | | 2 | 4 | 2 | 2 | 2 | 2 | 2 | 2 | 2 | 2 | 2 |
| composition | | | (Meth)acrylic acid ester monomer unit | Type | BA | - | BA | 2EHA | 2EHA | BA | BA | BA | BA | BA | BA |
| | | | | Proportional content [mass%] | 94.2 | - | 94.2 | 65 | 70 | 94.2 | 94.2 | 94.2 | 94.2 | 94.2 | 94.2 |
| | | | Hydrophilic group-containing monomer unit | Type | MAA | - | MAA | MAA | MAA | MAA | MAA | MAA | MAA | MAA | MAA |
| | | | | Proportional content [mass%] | 2 | - | 2 | 3 | 3 | 2 | 2 | 2 | 2 | 2 | 2 |
| | | | Cross-linkable monomer unit | Type | AGE | - | AGE | AGE | AGE | AGE | AGE | AGE | AGE | AGE | AGE |
| | | Particulate | | Proportional content [mass%] | 1.5 | - | 1.5 | 1.7 | 1.7 | 1.5 | 1.5 | 1.5 | 1.5 | 1.5 | 1.5 |
| | | polymer | | Type | AMA | - | AMA | AMA | AMA | AMA | AMA | AMA | AMA | AMA | AMA |
| | | | | Proportional content [mass%] | 0.3 | - | 0.3 | 0.3 | 0.3 | 0.3 | 0.3 | 0.3 | 0.3 | 0.3 | 0.3 |
| | | | Other monomer unit | Type | AN | - | AN | ST | ST | AN | AN | AN | AN | AN | AN |
| | | | | Proportional content [mass%] | 2 | - | 2 | 30 | 25 | 2 | 2 | 2 | 2 | 2 | 2 |
| | | | Glass-transition temperature [°C] | | -40 | - | -40 | -25 | -30 | -40 | -40 | -40 | -40 | -40 | -40 |
| | | | Volume-average particle diameter [µm] | | 0.36 | - | 0.36 | 0.31 | 0.18 | 0.36 | 0.36 | 0.36 | 0.36 | 0.36 | 0.36 |
| | | | Content [parts by mass] | | 3 | - | 1.3 | 4 | 4 | 4 | 4 | 4 | 4 | 4 | 4 |
| | Non-conductive inorganic particles | | Type | | Al₂O₃ | Al₂O₃ | Al₂O₃ | Al₂O₃ | Al₂O₃ | BaSO₄ | Al₂O₃ | Al₂O₃ | Al₂O₃ | Al₂O₃ | Al₂O₃ |
| | | | Content [parts by mass] | | 100 | 100 | 100 | 100 | 100 | 100 | 100 | 100 | 100 | 100 | 100 |
| Evaluation | Dispersion stability | | | | A | A | A | A | A | A | C | C | C | C | A |
| | Coatability | | | | A | A | A | A | A | A | C | C | C | B | C |
| | Heat shrinkage resistance | | | | B | A | A | A | A | A | B | B | C | C | B |
| | Close adherence | | | | A | B | B | A | A | A | A | C | A | A | C |
| | Cycle characteristics | | | | B | A | A | A | B | A | A | B | A | A | B |

It can be seen from Tables 1 and 2 that it was possible to form a slurry composition having excellent dispersion stability and coatability and a heat-resistant layer having excellent heat shrinkage resistance in Examples 1 to 18 in which the used binder composition contained a water-soluble polymer that included an amide group-containing monomer unit, an acid group-containing monomer unit, and a hydroxyl group-containing monomer unit and in which the proportional contents of the amide group-containing monomer unit and the acid group-containing monomer unit were within specific ranges. It can also be seen that the heat-resistant layers of Examples 1 to 18 had excellent close adherence with a substrate and could cause a secondary battery to display excellent cycle characteristics.

On the other hand, it can be seen that dispersion stability and coatability of a slurry composition could not be sufficiently ensured in Comparative Example 1 in which the used binder composition contained a water-soluble polymer that only included an amide group-containing monomer unit and an acid group-containing monomer unit.

It can also be seen that dispersion stability and coatability of a slurry composition could not be sufficiently ensured and a heat-resistant layer having excellent close adherence with a substrate could not be formed in Comparative Example 2 in which the used binder composition contained a water-soluble polymer that only included an amide group-containing monomer unit.

It can also be seen that dispersion stability and coatability of a slurry composition could not be sufficiently ensured and a heat-resistant layer having excellent heat shrinkage resistance could not be formed in Comparative Example 3 in which the used binder composition contained a water-soluble polymer in which the proportional contents of an amide group-containing monomer unit and an acid group-containing monomer unit were outside of the specific ranges.

It can also be seen that dispersion stability of a slurry composition could not be sufficiently ensured and a heat-resistant layer having excellent heat shrinkage resistance could not be formed in Comparative Example 4 in which the used binder composition contained a water-soluble polymer in which the proportional contents of an amide group-containing monomer unit and an acid group-containing monomer unit were outside of the specific ranges.

It can also be seen that coatability of a slurry composition could not be sufficiently ensured and a heat-resistant layer having excellent close adherence with a substrate could not be formed in Comparative Example 5 in which the used binder composition contained a water-soluble polymer in which the proportional content of an acid group-containing monomer unit was outside of the specific range.

### INDUSTRIAL APPLICABILITY

According to the present disclosure, it is possible to provide a binder composition for a non-aqueous secondary battery heat-resistant layer with which it is possible to produce a slurry composition for a non-aqueous secondary battery heat-resistant layer that has excellent dispersion stability and coatability and that can form a heat-resistant layer for a non-aqueous secondary battery having excellent heat shrinkage resistance.

Moreover, according to the present disclosure, it is possible to provide a slurry composition for a non-aqueous secondary battery heat-resistant layer that has excellent dispersion stability and coatability and that can form a heat-resistant layer for a non-aqueous secondary battery having excellent heat shrinkage resistance.

Furthermore, according to the present disclosure, it is possible to provide a heat-resistant layer for a non-aqueous secondary battery that has excellent heat shrinkage resistance and a non-aqueous secondary battery that includes this heat-resistant layer.

## Claims

1. A binder composition for a non-aqueous secondary battery heat-resistant layer comprising a water-soluble polymer and water, wherein
the water-soluble polymer includes an amide group-containing monomer unit, an acid group-containing monomer unit, and a hydroxyl group-containing monomer unit, and
proportional content of the amide group-containing monomer unit in the water-soluble polymer is not less than 63 mass% and not more than 98 mass% and proportional content of the acid group-containing monomer unit in the water-soluble polymer is not less than 1 mass% and not more than 20 mass%.

2. The binder composition for a non-aqueous secondary battery heat-resistant layer according to claim 1, wherein proportional content of the hydroxyl group-containing monomer unit in the water-soluble polymer is not less than 1 mass% and not more than 25 mass%.

3. The binder composition for a non-aqueous secondary battery heat-resistant layer according to claim 1 or 2, wherein the hydroxyl group-containing monomer unit is a hydroxyl group-containing (meth)acrylamide monomer unit.

4. The binder composition for a non-aqueous secondary battery heat-resistant layer according to any one of claims 1 to 3, wherein a molar ratio of proportional content of the hydroxyl group-containing monomer unit relative to proportional content of the acid group-containing monomer unit in the water-soluble polymer is 0.70 or more.

5. The binder composition for a non-aqueous secondary battery heat-resistant layer according to any one of claims 1 to 4, wherein the water-soluble polymer has a weight-average molecular weight of not less than 200,000 and not more than 2,000,000.

6. The binder composition for a non-aqueous secondary battery heat-resistant layer according to any one of claims 1 to 5, further comprising a particulate polymer.

7. A slurry composition for a non-aqueous secondary battery heat-resistant layer comprising: non-conductive inorganic particles; and the binder composition for a non-aqueous secondary battery heat-resistant layer according to any one of claims 1 to 6.

8. A heat-resistant layer for a non-aqueous secondary battery formed using the slurry composition for a non-aqueous secondary battery heat-resistant layer according to claim 7.

9. A non-aqueous secondary battery comprising the heat-resistant layer for a non-aqueous secondary battery according to claim 8.
